# EUROPEAN PATENT APPLICATION

(11) **EP 4 776 107 A1**
(43) Date of publication of application: **15.07.2026**
(21) Application number: 25226715.8
(22) Date of filing: 23.12.2025
(51) Int. Cl.: G06F 3/041

(54) **ADAPTIVE DETERMINATION OF STYLUS TILT**

(30) Priority: 09.01.2025 US 202519015012
(71) Applicant: Microsoft Technology Licensing, LLC, Redmond, WA 98052 (US)
(72) Inventor: ROSENBLAT, Itai, Redmond, 98052 (US); MENASHOF, Roei Shlomo, Redmond, 98052 (US); ISTRIN, Oren, Redmond, 98052 (US)
(74) Representative: CMS Cameron McKenna Nabarro Olswang LLP

(57) **Abstract**

Methods, devices, systems, and computer program products are provided for adaptive determination of stylus tilt by selectively using gyroscopic and sensor data for accuracy of tilt determinations as signal conditions change. A device comprises an orientation detector that determines stylus tilt using a first tilt detector based on a first set of conditions detected at a first time. The device detects a second set of conditions at a second time. The device adapts tilt determination from the first tilt detector to a second tilt detector for determination of tilt at the second time. The device determines tilt at the second time using the second tilt detector. Adaptive tilt detection can vary tilt calculations by using different equations, using the same equation with different weights, blending the results of calculations using multiple equations, etc., to maintain the accuracy of tilt determinations as signal conditions change.

## Description

### BACKGROUND

Touch interfaces of computing devices allow users to perform operations such as selecting displayed content, writing, drawing, and shading, through the use of input devices including touch instruments (e.g., styluses). The quality of user experience with such touch instruments depends at least in part on the electrostatic communication link between a digitizer of the computing device and tip and ring sensors of the touch instrument.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Methods, systems, devices, and computer program products are provided for adaptive determination of touch instrument tilt by selectively using gyroscopic and sensor data, which improves the accuracy of tilt determinations as signal conditions change, such as when the touch instrument is at high hover heights, at screen edges, and/or in noisy environments, while managing touch instrument power efficiency by powering down a sensor or the gyroscope when not used in a tilt calculation. Precision and power efficiency in touch instrument-based input devices are enhanced by dynamically adjusting the contribution of each sensor and intelligently managing power consumption. Compensation of gyroscopic drift with reliable sensor data supports seamless transitions in tilt calculations to seamlessly maintain tilt determination accuracy, especially at touch screen edges and in noisy environments.

In an aspect, a device (e.g., a touch instrument) comprises multiple sensors (e.g., tip/ring sensors) and a gyroscope, which are selectively used for accurate tilt determination, activated and deactivated as needed for tilt determination and power management, and used to correct gyroscopic drift to maintain gyroscope accuracy. A decision-making process may prioritize data for tilt determinations based on signal strength.

In a further aspect, an orientation detector is configured to determine a tilt of a touch instrument relative to a touch screen associated with a touch device using a first tilt detector based on a first set of conditions detected at a first time. A second set of conditions is detected at a second time. The tilt determination is adapted from the first tilt detector to a second tilt detector for determination of the tilt at the second time (e.g., to optimize tilt determination accuracy). The tilt is determined at the second time using the second tilt detector.

In another aspect, a device can use sensor signals to periodically correct gyroscopic drift to maintain the accuracy of tilt detection when tilt detectors use orientation information generated by the gyroscope.

In another aspect, power can be conserved in the touch instrument by reducing or turning off power to at least one of the gyroscope or the second sensor when not utilized by the selected tilt detection calculation.

Further features and advantages, as well as the structure and operation of various examples, are described in detail below with reference to the accompanying drawings. It is noted that the ideas and techniques are not limited to the specific examples described herein. Such examples are presented herein for illustrative purposes only. Additional examples will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows an example system in which a handheld touch instrument interacts with a touch device, according to an embodiment.
FIG. 2 shows an example system in which touch instrument tilt is adaptively determined with respect to a touch device surface, according to embodiments.
FIG. 3 shows a block diagram of an example touch instrument configured for adaptive determination of tilt, according to an embodiment.
FIG. 4 shows a block diagram of an example touch device configured for adaptive determination of tilt, according to an embodiment.
FIG. 5 shows a flowchart for adaptive determination of stylus tilt, adaptive gyro drift correction, and adaptive power management, in accordance with an example embodiment.
FIG. 6 shows a flowchart for adaptive determination of stylus tilt, according to an example embodiment.
FIG. 7 shows a flowchart for adaptive gyro drift correction, in accordance with an example embodiment.
FIG. 8 shows a flowchart for adaptive power management, in accordance with an example embodiment.
FIG. 9 shows flowchart for adaptive determination of stylus tilt, according to an example embodiment.
FIG. 10 shows a block diagram of an example computer system in which embodiments may be implemented.

The features and advantages of embodiments will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Section II below describes example embodiments for adaptive hover operation of touch instruments. Section III below describes example mobile device and computing device embodiments that may be used to implement features of the embodiments described herein. Section IV below describes additional examples and advantages, and Section V provides concluding remarks.

### II. Example Embodiments for an Adaptive Hover Touch Instrument

Touch interfaces of computing devices allow users to perform operations such as selecting displayed content, writing, drawing, and shading, through the use of input devices including touch instruments (e.g., styluses). The quality of user experience with such touch instruments depends at least in part on the electrostatic communication link between a digitizer of the computing device and tip and ring sensors of the touch instrument. Furthermore, the accurate capture of user operations depends on accurate position and orientation determinations such as stylus tilt, which, in turn, depends on the digitizer being able to detect useful signals provided by stylus tip and ring sensors. An electrostatic signal (communication link) between a digitizer and tip and/or ring sensors of a touch instrument may weaken in noisy environments, such as when the touch instrument is near or beyond the edge of the digitizer, and/or when a hover height (the distance between touch instrument and touch screen) exceeds a critical distance (e.g., approximately 1 cm) from the digitizer. High accuracy and low latency may be crucial for an optimal user experience with digital inking applications.

As such, methods, devices, systems, and computer program products are provided for adaptive determination of stylus tilt by selectively using gyroscopic and sensor data, which improves the accuracy of tilt determinations, such as when the stylus is at high hover heights, at screen edges, and/or in noisy environments, while managing stylus power efficiency by powering down a sensor or the gyroscope when not used in a tilt calculation. Note that although description provided herein often refers to a "stylus" as an example touch instrument, embodiments are applicable to further types of touch instruments, including digital pens, smart pens, etc.

Methods, devices, systems, and computer program products are provided for adaptive determination of stylus tilt by selectively using gyroscopic and sensor data, which improves the accuracy of tilt determinations as signal conditions change, such as when the stylus is at high hover heights, at screen edges, and/or in noisy environments, while managing stylus power efficiency by powering down a sensor or the gyroscope when not used in a tilt calculation. Embodiments described herein enhance precision and power efficiency in stylus-based input devices by dynamically adjusting the contribution of each sensor and intelligently managing power consumption. Compensation of gyroscopic drift with reliable sensor data supports seamless transitions in tilt calculations to seamlessly maintain tilt determination accuracy, especially at touch screen edges and in noisy environments.

In examples, a device (e.g., a touch instrument) comprises multiple sensors (e.g., tip/ring sensors) and a gyroscope, which are selectively used for accurate tilt determination, activated and deactivated as needed for tilt determination and power management, and used to correct gyroscopic drift to maintain gyroscope accuracy. A decision-making process may prioritize data for tilt determinations based on signal strength.

In one aspect, a device (e.g., stylus and/or touch device) comprises an orientation detector configured to determine a tilt, of a touch instrument relative to a touch screen associated with a touch device, using a first tilt detector based on a first set of conditions detected at a first time. The device is configured to detect a second set of conditions at a second time. The device is configured to adapt tilt determination from the first tilt detector to a second tilt detector for determination of the tilt at the second time (e.g., to optimize tilt determination accuracy). The device is configured to determine the tilt at the second time using the second tilt detector. Such adaptive tilt determination enables tilt determination during different conditions. For instance, the first tilt detector may be used for tilt determination at a first time of first conditions (e.g., signals from tip and/or ring sensors of a touch instruments are sufficiently strong), while the second tilt detector may be used for tilt determination at a second time of second conditions that are insufficient (e.g., the strength of signals from tip and/or ring sensors of a touch instruments are too weak) for use of the first tilt detector. Adaptive tilt detection can vary tilt calculations in a variety of ways, such as by using different equations, using the same equation with different weights, averaging or otherwise blending the results of calculations by multiple equations, etc. The different equations, weights, etc., may be respectively calibrated for varying conditions (strong tip and/or ring sensors, weak tip and/or ring sensors, etc.), so that tilt determination is widely available to be performed.

In another aspect, the device can use sensor signals to periodically correct gyroscopic drift to maintain the accuracy of tilt detection when tilt detectors use orientation information generated by the gyroscope.

In still another aspect, power can be conserved in the touch instrument by reducing or turning off power to at least one of the gyroscope or the second sensor when not utilized by the selected tilt detection calculation.

Systems and devices may be configured in various ways for adaptive determination of stylus tilt by selectively using gyroscopic and sensor data. Figures disclose several of many possible embodiments. Dashed components are presented as a compact way to present several of many possible implementations in one figure. Various implementations can combine one or more (e.g., all) components shown in examples with one or more other components not shown.

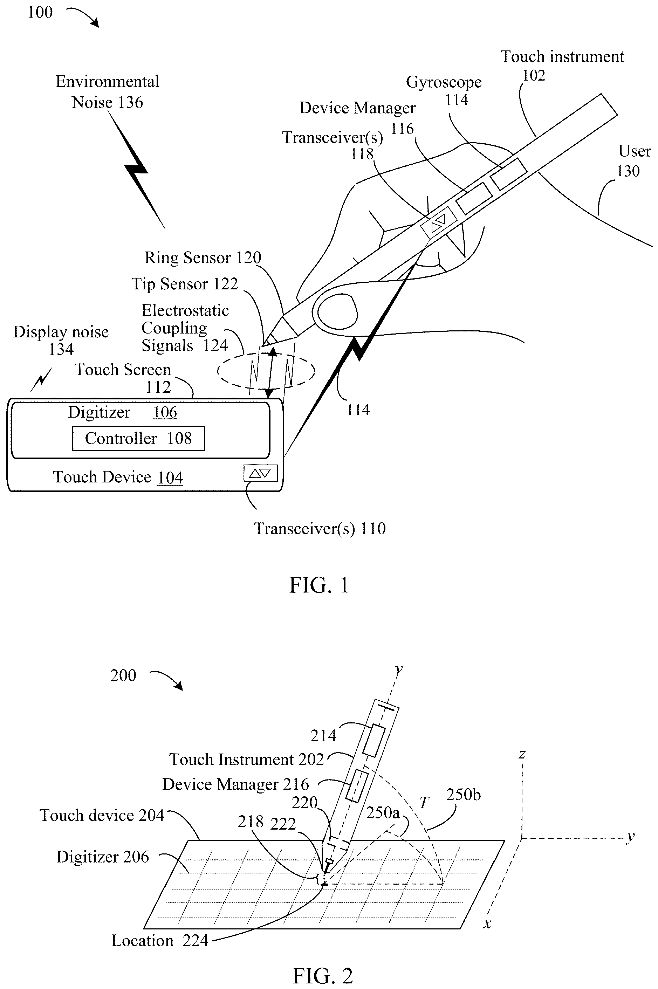

FIG. 1 shows a block diagram of a system 100 configured for signaling related to adaptive determination of stylus tilt, according to an example embodiment. System 100 is configured to enable adaptive determination of stylus tilt by selectively using gyroscopic and sensor data. As shown in FIG. 1, system 100 includes a touch instrument (e.g., stylus) 102 and a touch device 104. Touch instrument 102 includes a gyroscope 114, a device manager 116, one or more transceivers 118, a ring sensor 120, and a tip sensor 122. Touch device 104 includes a digitizer 106, one or more transceivers 110, and a touch screen 112. Touch instrument 102 and touch device 104 communicate with each other wirelessly via communication signals, such as radio frequency (RF) network signals 114 (e.g., Bluetooth) and RF signals based on electrostatic coupling 124. System 100 is described in further detail as follows.

Touch device 104 may be any type of computing device or computing system having an integrated touch interface or a peripheral touch interface, e.g., a touch screen or touch pad, that interfaces with or comprises digitizer 106 associated therewith for interaction with touch instrument 102. Touch device 104 may be, without limitation, a terminal, a personal computer, a laptop computer, a tablet device, a smart phone, a personal digital assistant, a game console or gaming device, a television, and/or the like that may be utilized by users through interaction with touch instruments, such as touch instrument 102, to perform inking operations. Touch instrument 102 may be utilized via contact/interaction at touch screen 112 to perform inking operations, communicating via digitizer 106 and transceiver(s) 110.

Touch device 104 includes one or more RF network communication transceivers, such as transceiver(s) 110 for communication with transceiver(s) 118 in touch instrument 102 using one or more communication protocols, such as Bluetooth. Touch device 104 receives information via transceiver(s) 110, such as orientation information generated by gyroscope 114 in touch instrument 102. Touch device 104 transmits information via transceiver(s) 110, such as orientation information (e.g., stylus tilt), position information (e.g., detected location on digitizer 106), power management information (e.g., to enable/disable components that are not used in orientation calculations, such as gyroscope 114, ring sensor 120), sensor management information (e.g., to correct gyroscopic drift).

Digitizer 106 includes an antenna array configured to receive/transmit communication signals from/to touch instrument 102. Digitizer 106 communicates electrostatically with touch instrument 102, for example, via electrostatic coupling 124 created between digitizer 106 and the tip sensor 122 and ring sensor 120 in touch instrument 102. Digitizer 106 includes a controller 108 (e.g., microprocessor) configured to process communications with touch instrument 102 and to act as an interface with a processor (e.g., CPU) in touch device 104. Controller 108 receives commands and information from input devices such as touch instrument 102, for example, to determine when and/or where to implement inking operations and/or to provide feedback, such as to indicate inking to the user via a user interface (UI), e.g., on a display, such as a touch screen/display 112.

Touch display 112 emits display noise 134, which may impact the SNR of RF signals based on electrostatic coupling 124 and RF network signals 114. Environmental noise 136 (e.g., electromagnetic frequencies caused by lighting systems) may impact the SNR of RF signals based on electrostatic coupling 124 and RF network signals 114, increasingly so as the distance between touch instrument 102 and digitizer 106 increases.

Touch device 104 is configured to execute software applications that cause content to be displayed to users via UIs associated with touch interfaces, such as touch screen 112. Users interact with displayed information, for examples, using touch instrument 102. Software applications executed by touch device 104 enable users to provide selection indicia for content, to perform inking operations, etc., via digitizer 106 and touch instrument 102. In some implementations, controller 108 and/or a processor in touch device 104 may be configured to use signals provided by tip sensor 122, ring sensor 120, and orientation information generated by gyroscope 114 and transmitted by transceiver(s) 118 to determine the position and orientation of touch instrument 102 relative to digitizer 106. In some implementations, controller 108 and/or a processor in touch device 104 may be configured to process and to transmit information about signals provided by tip sensor 122, ring sensor 120 to touch instrument 102 to determine the position and orientation of touch instrument 102 relative to digitizer 106.

Touch instrument 102 may be, without limitation, a touch pen, a stylus, a light pen, a wearable device for a user's finger, a glove, etc. Touch instrument 102 is used by user 130 to interact with touch device 104. Touch instrument 102 may be held and wielded by a user 130 to interface with a touch device 104 to perform functions, such as selecting objects, writing/inking, shading (e.g., low force inking), erasing, and/or the like. For example, when the touch instrument 102 is in contact with the touch device 104, inking operations may be desired by the user, but when the touch instrument 102 hovers above the touch device 104, the user 130 may desire inking operations to cease. As shown in FIG. 1, user 130 may rest a hand holding a stylus near the edge (e.g., border, perimeter) of the digitizer 106, which may lead to a reduction in detected signal strength (increase in signal-to-noise ratio (SNR)) for signals 124 provided by tip sensor 122 and/or ring sensor 120, which impacts the determination of orientation (e.g., tilt), among other calculations.

Touch instrument 102 includes gyroscope 114, device manager 116, transceiver(s) 118, ring sensor 120, and tip sensor 122. Touch instrument 102 communicates with touch device 104 via electrostatic coupling-based RF signals 124 when ring sensor 120and tip sensor 122 are proximate to digitizer 106 and based on network-based RF signals 114 between transceiver(s) 118 and transceiver(s) 110. Electrostatic RF signals 124 are used to determine position and orientation of touch instrument 124 relative to digitizer 106. The frequency of transmission of information by touch instrument 102 to touch device 104 may be, for example, 100 Hz (e.g., every 10 ms).

As shown in FIG. 1, user 130 may position touch instrument 102 so that ring sensor 120 (e.g., and tip sensor 122) is outside the perimeter/border of digitizer 106, which degrades (e.g., decreases the detectable magnitude) signal 124 provided by ring sensor 120 (e.g., and by tip sensor 120), increasing the SNR associated with ring sensor 120 (e.g., and tip sensor 122), thereby rendering measurements and determinations (e.g., tilt determinations) based on ring sensor signals 124 less accurate.

Similarly, when tip sensor 120 and ring sensor 122 are beyond a threshold distance (e.g., maximum hover range) away from touch screen 112, the magnitude of signal 124 provided by tip sensor 122 and ring sensor 120 is significantly lower, significantly increasing the SNR associated with ring sensor 120 (e.g., and tip sensor 122), thereby rendering measurements and determinations based on ring sensor signals 124 less accurate. A "hover range" of touch instrument 102 refers to how far touch instrument 102 can hover (e.g., a maximum distance) before losing synchronization (sync) with touch device 104. For example, tip sensor (e.g., tip antenna/electrode) 122 can provide P mm of hover range before losing sync with digitizer 106 while ring sensor (e.g., conical ring antenna/electrode) 120 combined with tip sensor 122 can provide a higher hover range of Q mm before losing sync (e.g., where Q is greater than P). An electrostatic communication link between digitizer 106 and touch instrument 102 may be broken when a hover height (e.g., distance between tip sensor 122 and touch screen 112) exceeds a particular distance, such as approximately 1 cm.

Environmental noise 136 and/or display noise 134 also contribute to a decrease in the SNR associated with signals 124 provided by tip sensor 122 and ring sensor 120. Degraded SNR impacts position and orientation determinations as well as other determinations that depend on those determinations for accurate responses to user interactions.

Touch instrument 102 includes gyroscope 114, which generates orientation information for touch instrument. Gyroscope 114 provides additional or alternative orientation information for touch instrument 102. Orientation information generated by gyroscope 114 may be used as an alternative or in addition to orientation determinations based on signals 124 provided by ring sensor 120 and tip sensor 122. Gyroscope 114 is a powered component that may be activated and deactivated, as needed, for example, by device manager 116. Gyroscope 114 is susceptible to drift, which needs correction. As described herein, gyro drift can be corrected using accurate orientation information determined based on signals 124 provided by ring sensor 120 and tip sensor 122. Maintaining the accuracy of orientation information generated by gyroscope 114 allows gyroscope 114 to supplement or replace orientation information gleaned from signals 124 when the SNR for signals 124 is low.

Touch instrument 102 includes a device manager 116 (e.g., executed by a processor). Device manager 116 is configured to perform or to support position and orientation determinations. Device manager 116 is configured to send and receive information via signals 124 and/or RF network signals 114 to determine characterization information of touch instrument 102, such as position, orientation, inking operations, etc.

Device manager 108 may be implemented in hardware, custom hardware, hardware combined with one or both of software and/or firmware, and/or as program instructions encoded on computer-readable storage media, and may be configured to perform any functions and/or operations described herein for adaptive orientation (e.g., tilt) determinations using signals provided by ring sensor 120, tip sensor 122, and/or orientation information generated by gyroscope 114. In embodiments, adaptive tilt determinations may be performed based on one or more lookup tables stored in a memory of touch instrument 102. Lookup tables may be generated by touch instrument 102, or may be provided to touch instrument 102 from touch device 104.

Position and orientation of touch instrument 102 (e.g., relative to touch screen 112) is monitored (e.g., detected) by touch device 104 (e.g., controller 108) and/or touch instrument 102 (e.g., device manager 116) so that touch device 104 and touch instrument 102 can respond accurately to user movements and operations with touch instrument 102. Orientation, such as tilt, may be used in numerous determinations. For example, position information, such as a "hover height" (a/k/a distance, proximity) of touch instrument 102 relative to touch screen 112 may be determined by orientation and/or position detection components of device manager 116 and/or controller 108, which may apply logic to sensor data or received signal characteristics (e.g., energies) from ring sensor 120, tip sensor 122, and/or gyroscope 114 to determine position and orientation information. Device manager 116 and/or controller 108 may analyze information related to orientation (e.g., tilt) to determine whether to adapt/modify a tilt detection configuration.

FIG. 2 shows a system 200 configured for of adaptive determination of stylus tilt, according to example embodiments. As shown in FIG. 2, system 200 comprises a touch instrument 202 and a touch device 204 that includes a digitizer 206. Touch instrument 202 includes a gyroscope 214, a device manager 216, one or more ring sensors 220, and a tip sensor 222. System 200 is described in further detail as follows.

Touch instrument 202 interfaces with the antenna array in digitizer 206, as an example of a user interacting with displayed content that may be displayed by a touch/display screen 112. Touch instrument 202 may be held by a user at various positions, various distances, and with various orientations with respect to touch device 204 and digitizer 206. For example, touch instrument 202 may interact with touch device 204 at location 224 with, e.g., with force (or pressure) being applied by a user. Location 224 may correspond to, for example, content displayed by, or a location for inking operations to be performed on, touch device 204. A distance of touch instrument 202 from touch device 204 at location 224 may be zero or approximately zero, for example, when force is detected as being greater than zero or approximately greater than zero (e.g., *f*> 2 grams). A distance 218 between digitizer 206 and touch instrument 202 at location 224 may be greater than zero (e.g., no contact or hovering), for example, when force detected is less than approximately 2 grams (e.g., approximately zero). Force may vary corresponding to different inking operations. For example, a user may press harder with more force through touch instrument 202 to apply full inking, or conversely, may apply less force to apply light inking or shading. Distances and forces that may be involved in various implementations may be determined and/or identified by device manager 216.

Touch instrument 202 has an orientation (e.g., tilt) with respect to the surface of touch device 204 (e.g., with respect to the plane in which antennas of digitizer 206 reside). An axis v corresponding to the length of touch instrument 202 is indicative of the orientation thereof. Such an axis can be defined by an azimuth angle 118a and a longitudinal angle 118b. Location 224 is shown as an example reference point to determine azimuth angle 118a and longitudinal angle 118b with respect to touch device 204. Any reference point of touch device 204 may be used to determine an orientation of touch instrument 202. Orientation may be changed by altering one or more of azimuth angle 118a and/or longitudinal angle 118b. A smaller longitudinal angle of orientation of touch instrument 202 may cause more or less of touch instrument 202 to be more horizontally aligned to (e.g., be closer to, or further from) the plane of the antennas of digitizer 206. An orientation of touch instrument 202 may correspond to the exposure of sensors (e.g., antennas) of touch instrument 202 with communication signals transmitted by the antennas of touch device 204. Different communication signal energies (e.g., electrostatic (capacitive) coupling) may be determined for different antennas of touch instrument 202 by device manager 216 and/or controller of touch device 204 for different orientations of touch instrument 202.

Touch instrument 202 includes one or more ring sensors (e.g., antenna(s)) 220. In an example, ring sensor(s) 220 can be controlled by device manager 216 to increase or decrease hover range. Ring sensor(s) 220 comprise rings on the interior and/or exterior enclosure of touch instrument 202. Each ring sensor 220 can be electrically coupled to one or more drivers (e.g., transceivers). In an example, transceivers may be part of device manager 216. Device manager 216 (e.g., position and orientation detectors therein) are configured to use signals provided by ring sensor(s) 220 and tip sensor 222 to determine position (e.g., x, y, z spatial location), including hover height (e.g., distance between touch instrument 202 and touch device 204) and orientation of touch device (e.g., tilt).

Orientation (e.g., tilt angle) and distance of touch instrument 102 may be determined based on energies of the communication signals from tip sensor 222 and ring sensor 220 received by antennas in digitizer 206. Tip sensor 222 and ring sensor(s) 220 may transmit signals, for example, at the same time using different frequencies or at different times using the same frequency. Signal energies and the relative distances between the center mass of detected energies provided by ring sensor 220 and tip sensor 222, detected by digitizer 206, vary based on the orientation (e.g., tilt) of touch instrument 102. Energies and relative distances between the center mass of the energies may be most distinguished, for example, by comparing detected energies and relative centers of mass with touch instrument 102 at a tilt angle T of 90 degrees such that touch instrument 102 is perpendicular to touch device 104 to a tilt angle of zero (0) degrees such that touch instrument 102 is parallel to touch device 104.

Different combinations of orientation and distance may provide for the same value of received signal energy. For example, tilt angle T1at a distance D1 may result in the same detected energy values as tilt angle T2 at a distance D2. A reason that combinations of orientation and distance may provide for the same value of received signal energy may be that a signal is a function of the capacitance between touch instrument 102 to touch device 104, and capacitance is function of area and distance. A touch instrument that is tilted to a non-perpendicular orientation may expose more area of antenna (e.g., in the tip) to a touch device screen than a touch instrument at a 90 degree angle. In other words, in a tilt angle orientation range of zero to 90 degrees, smaller angles correspond to greater energies received. At 90 degrees, there may be a minimum (e.g., approximately zero) distance between the first and second energies in signals provided by tilt sensor 222 and ring sensor 220. At zero (0) degrees, there may be a maximum distance between the first and second energies in signals provided by tilt sensor 222 and ring sensor 220.

As shown in FIG. 2, touch instrument 102 has an orientation with respect to touch device 204, denoted by x-y-z axes, where the x-y plane corresponds to the surface of plane of touch device 204 (and digitizer 206), and the z-axis corresponds to the distance between touch instrument 202 and touch device 204.

As shown, the orientation of touch instrument 202 includes a tilt angle T 250b (e.g., longitudinal or vertical angle) between the x-y axis plane and a vector v corresponding to axis of touch instrument 102 in the z-axis. The azimuth (e.g., horizontal plane) angle 250a may also be determined relative to a reference, such as from a designated X or Y axis. Likewise, touch instrument 202 may be held at a distance 218 from location 224 of touch device 204 (e.g., zero millimeters or more).

Alternatively, or additionally, tilt angle T 250b may be determined, in part or in full, using orientation information generated by gyroscope 214. In some examples, there may be multiple tilt detectors. A first tilt detector calculates the tilt based on the first and second signals (e.g., generated by ring sensor 220 and tip sensor 222) without the orientation information while a second tilt detector calculates the tilt based, at least in part, on the orientation information (e.g., with or without regard to the first and second signals. In some example, the first and second tilt detectors can use the same equation but apply at least one different weight to at least one variable (e.g., information based on the first signal, information based on the second signal, and the orientation information). Different weights may be used to calibrate a same equation for use during different tilt detection situations. For instance, a greater weight may be applied to the first and/or second signals when one or both is sufficiently strong (e.g., greater value than a threshold value), such as when a touch instrument is applied to a touch screen away from the screen edge. A lesser weight value may be applied to the first and/or second signals when or both is relatively weak (e.g., lower value than the threshold value), such as when the touch instrument is applied to the touch screen at or near the screen edge (in which case it may be desirable to emphasize the orientation information with a greater weight value). In some examples, the results (e.g., determined tilt) from multiple equations may be blended (e.g., averages). In some examples, the tilt determined by one equation may be used to correct or override the tilt determined by another equation.

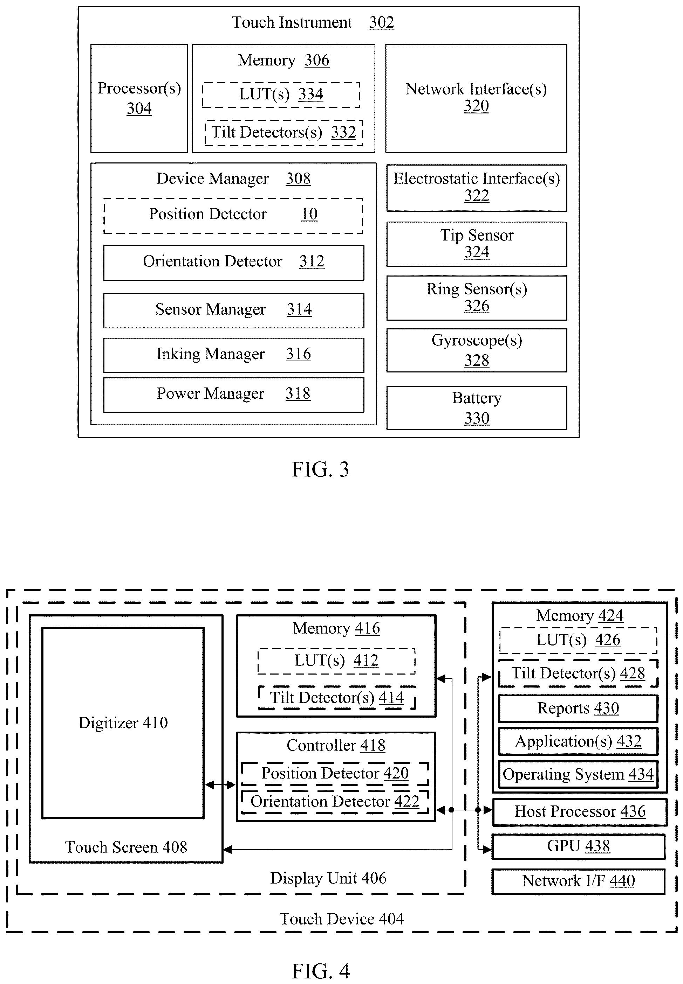

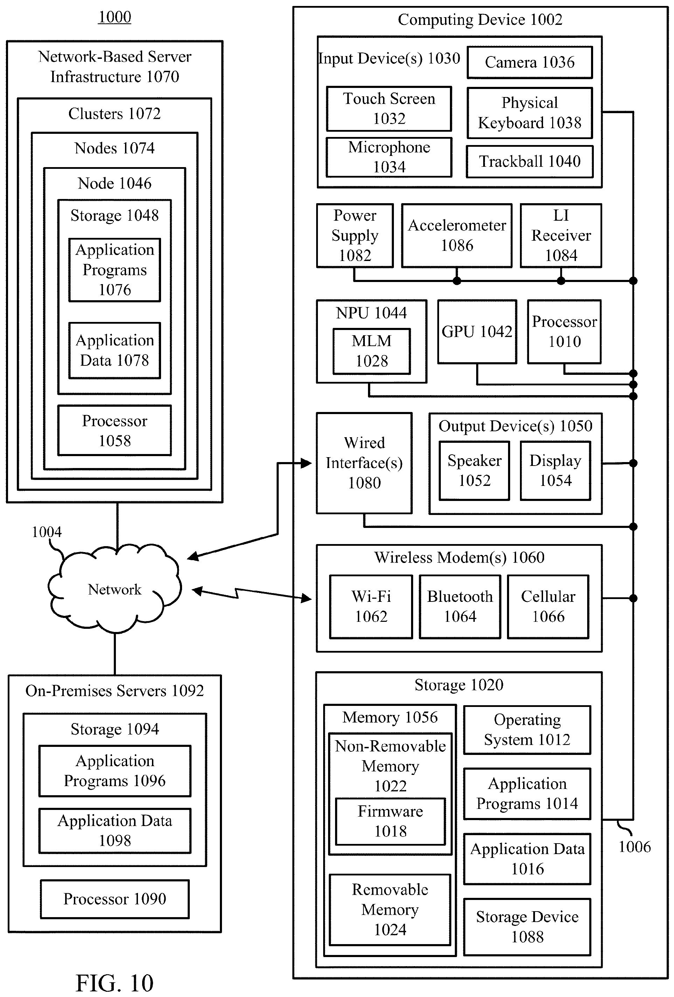

FIG. 3 shows a block diagram of an example touch instrument 302 configured for adaptive determination of stylus tilt, according to an example embodiment. Touch instrument 302 is an embodiment of touch instruments 102/202 (FIGS. 1 and 2). Touch instrument 302 may be any type or style of touch instrument, as mentioned elsewhere herein, or as otherwise known. As shown in FIG. 3, touch instrument 302 includes a processor 304, one or more memories and/or other physical storage device indicated as a memory 306, one or more network communication/data interfaces indicated as an interface 320, an electrostatic communication interface 322, a tip sensor 324, one or more ring sensors 326, one or more gyroscopes 328, a battery 330, and a device manager 308, which may be an embodiment of device manager 116/216 (FIGS. 1 and 2). Device manager 308 includes a position detector 310, an orientation detector 312, a sensor manager 314, an inking manager 316, and a power manager 318. Memory 306 includes one or more lookup tables 206a and one or more tilt detectors 332. Touch instrument 302 may comprise additional and/or alternative components (not shown for brevity and illustrative clarity), such as, for example, components and subcomponents of other devices and/or systems herein (e.g., force sensor, force detector), components described with respect to FIG. 10 further below, such as an operating system, basic input/output system (BIOS), etc. Touch instrument 302 is described in further detail as follows.

Processor(s) 304 and memory 306 may be, respectively, any type of processor circuit and memory that is described herein, and/or as would be understood by a person of skill in the relevant art(s) having the benefit of this disclosure. Processor(s) 304 and memory 306 may, respectively, comprise one or more processors or memories, different types of processors or memories, etc. Processor(s) 304 may comprise circuitry configured to execute computer program instructions, such as but not limited to embodiments of device manager 308, which may be implemented as computer program instructions for adaptive tilt determination, etc. Examples of processor(s) are provided in examples shown in FIG. 10.

Memory 306 is configured to store computer program instructions/code and other information and data described herein (e.g., tilt detector(s) 332, lookup table(s) 334, gyro calibration information, sensor data, and so on). Examples of memory 306 are provided in examples shown in FIG. 10. In some examples, memory 306 stores, for example, tilt detector(s) 332 and/or look up table(s) (LUT(s)) 334, accessed by device manager 308 (e.g., or components thereof) to perform adaptive tilt determination operations.

Tilt detector(s) 332 include one or more tilt detector algorithms, equations, and/or weights utilized by orientation detector 312 to determine a tilt of touch instrument 302 based on signals provided or received by tip sensor 324 and ring sensor(s) 326, and/or orientation information generated by gyroscope(s) 328. In some examples, the digitizer transmits electrostatic signals detected by tip sensor 324 and ring sensor(s) 326, and those signals are provided to orientation detector 312 to determine the tilt detector(s) 332 to calculate tilt under detected conditions (e.g., SNRs for signals), with or without orientation information generated by gyroscope(s) 328. In some examples, the digitizer may detect signals generated by tip sensor 324 and ring sensor(s) 326 and/or may receive orientation information generated by gyroscope(s) 328 via network interface(s) 320. The digitizer may include an orientation detector (e.g., tilt detector) that determines tilt and (e.g., then) provides the tilt determination to device manager 308 (e.g., orientation detector 312) via network interface(s) 320 or electrostatic interface(s) 322. In still other examples, touch device may perform adaptive tilt determinations and provide the determinations to the digitizer and/or to touch instrument 302. In still other examples, touch instrument 302, digitizer, and/or touch device may cooperatively perform operations related to adaptive tilt determinations. As these examples demonstrate, adaptive tilt determination may be cooperatively implemented by a variety of components in a variety of devices, which may be selected to perform tasks based on efficiency, time constraints, processing capacity, and/or other design criteria. Note that orientation detector 312 may be implemented in various ways, including as hardware (e.g., electrical circuitry, digital logic, a dedicated integrated circuit (IC), or as firmware or software executed by a processor. Furthermore, as described with respect to FIG. 3 and in further detail elsewhere herein, orientation detector 312 may be located in touch instrument 302, in the touch device that touch instrument 302 interacts with, or partially in touch instrument 302 and partially in the touch device.

Lookup table(s) (LUT(s)) 332 may include, without limitation, one or more tables that store relationships between adaptive tilt determination operations, orientations, distances, electrostatic coupling, communication signal energies, signal characteristics, tilt detector logic, algorithms, equations, variable weights, etc. Lookup table(s) 332 may be stored, for example, in memory 306, and may be referenced by processor 304 and/or device manager 308 for determinations of adaptive tilt determination operations, orientations, distances, electrostatic coupling, communication signal energies, signal characteristics, etc. Lookup table(s) 334 may be dynamically created and/or updated, or may be predetermined.

Interface 320 may comprise any type or number of wireless transceivers, configured to enable touch instrument 302 to communicate with other devices (e.g., touch device) over a network (e.g., personal area network (PAN)). Examples of networks include Bluetooth or other communication protocol, such as Microsoft Pen Protocol (MPP). Interface 320 may include hardware and/or software and may support any type of input devices, sensors (e.g., gyroscope(s) 328), and touch instruments that may be used for wireless communications, such as an electronic pen, a stylus, a light pen, force sensors, a mouse, a touch screen, a touch pad, a microphone, a camera, a kinetic sensor, a physical keyboard, a trackball, gloves, other wearables or sensors, etc., and/or the like. In an example, interface 320 may comprise input and output portions. For example, interface 320 may support Wi-Fi, Bluetooth^{®}, and other types of radio frequency communication signals. Additional input/output functions may be supported by interface 320, for example, as described below with respect to examples shown in FIG. 10.

Electrostatic interface(s) 322 may be configured to transmit, receive, process, and provide to device manager 308 communication signals of various types and protocols received from and/or transmitted to antennas of touch devices (e.g., via tip sensor 324, ring sensor(s) 326). Electrostatic interface(s) 322 may be configured, for example, to receive and quantify communication signal energies received at touch instrument 302 and provide such information to device manager 308 and to selectively activate and transmit appropriate signals on tip sensor 324 and/or ring sensor(s) 326 (e.g., as may be directed by device manager 308 for adaptive tilt determination, inking operations, and so on). Electrostatic interface(s) 322 may be part of, or may work in conjunction with, network interface(s) 320 for coordinating transmission/reception of communication signals with a touch device (e.g., touch device 104/204).

Tip sensor 324 and ring sensor(s) 326 are active (e.g., powered) electrodes that induce electrostatic RF signals for purposes of communication with digitizer 410. Tip sensor 324 and ring sensor(s) 326 are coupled to electrostatic interface(s) 322, which include transceivers to drive signals to digitizer 410 through tip sensor 324 and/or ring sensor(s) 326 and to receive signals from digitizer 410 through tip sensor 324 and/or ring sensor(s) 326. The antenna (e.g., electrode) array in the digitizer may detect signals (e.g., coupling signals and transmission signals) associated with tip sensor 324 and ring sensor(s) 326. Ring sensor(s) 326 are coupled to a power source (e.g., battery 330) managed by power manager 318. Ring sensor(s) 326 may be deactivated by power manager 318, for example, to conserve energy when ring sensor(s) 326 is/are not utilized by orientation detector 312 (e.g., selected tilt detector(s) 332) and activated when in use for adaptive tilt determination operations and/or in use for other operations.

Gyroscope(s) 328 (e.g., when activated) generate orientation information, which may be stored in memory 306 and utilized by device manager 308 and/or provided to touch device, e.g., via network interface(s) 320. Gyro(s) 328 can be any type of gyro(s) compatible with touch instrument 302. For example, gyro(s) 328 may include one or more optical gyros and/or one or more microelectromechanical sensor (MEMS) type gyros. Gyro(s) 328 may be coupled to a power source (e.g., battery 330) managed by power manager 318. Gyro(s) 328 may be deactivated by power manager 318, for example, to conserve energy when gyro(s) 328 is/are not utilized by orientation detector 312 (e.g., selected tilt detector(s) 332) and activated when in use for adaptive tilt determination operations and/or in use for other operations. Gyro(s) 328 may be (re)calibrated (e.g., periodically), for example, by sensor manager 314, e.g., using accurate tilt information based on signals provided by tip sensor 324 and ring sensor(s) 326.

Battery 330 provides power to active components, such as processor(s) 304, memory 306, network interface(s) 320, electrostatic interface(s) 322, and so on. Battery 330 and associated circuitry (e.g., voltage regulators) may be managed by power manager 318.

Device manager 308 comprises a plurality of components for performing the functions and operations described herein for adaptive tilt determinations for touch instrument 302. Example device manager 308 may comprise, for example, position detector 310, orientation detector 312, sensor manager 314, inking manager 316, and power manager 318. Some components may be omitted for clarity (e.g., force detector). While shown separately for illustrative clarity, in embodiments, one or more components may be combined together and/or as a part of other components of touch instrument 302. In an example, position detector 310 may be a proximity detector that determines touch mode, hover mode and/or specific hover distances between a touch instrument 302 and a touch device at specific locations on the touch device. In another example, processor(s) 304, memory 306, and device manager 308 (e.g., with or without other components), may comprise an integrated circuit (e.g., in a custom hardware implementation). Some implementations may have more or fewer components shown in example device manager 308. One or more components of device manager 308 (e.g., software-implemented components) may be stored in memory 306 and executed by processor(s) 304.

Position detector 310 comprises one or more types of detectors that detect the location of touch instrument in three-dimensional space, such as an x,y coordinate location relative to the digitizer and the proximity between touch instrument 302 and the touch device (e.g., digitizer) on the Z axis. A detector may comprise one or more sensors (e.g., force sensor) or other detection devices (e.g., antenna, transceiver) with or without processing logic implemented in hardware, software and/or firmware. Proximity of touch instrument 302 to the touch device may comprise, for example, touch mode, hover mode and/or specific distances between touch instrument 302 to the touch device.

Touch instruments may determine proximity, for example, based on a force detector, an orientation detector and/or a distance detector. A force detector may distinguish between a touch mode and a hover mode of a touch instrument. A distance detector (e.g., which may utilize orientation) may determine whether a touch instrument is in touch mode or hover mode. For example, a distance detector may be configured to determine distance based on electrostatic (e.g., capacitive) coupling information, such as signal energy(ies) detected for one or more communication signals from a touch device received by touch instrument 302 (e.g., via tip sensor 324 and ring sensor(s) 326). In an example, one or more antennas (e.g., tip sensor 324, ring sensor(s) 326) may receive energies from communication signals of the touch device (e.g., digitizer) for orientation detector 312 to determine the orientation of the touch instrument 302 with respect to the touch device. A distance between the touch instrument 302 and the touch device may be determined, for example, based on the determined orientation and the detected energies. In an example, differences in durations of signal flight prior to reception by antennas may be used to determine distance. The determined distance may provide an indication whether contact is being made with a touch device by the touch instrument 302 (e.g., touch mode), or whether the touch instrument 302 is hovering above the touch device (e.g., hover mode). A force detector and a distance detector may be used concurrently, e.g., as part of position detector 310.

Orientation detector 312 is configured to determine an orientation (e.g., tilt) of touch instrument 302 (e.g., relative to a touch device, such as touch device 104). Orientation detector 312 may be configured to determine an orientation (e.g., tilt) of touch instrument 302 based on determined, detected, measured, and/or received information. In various examples (e.g., as shown by dashed lines in FIGS. 3 and 4), the orientation (e.g., tilt) of touch instrument 302 may be determined by touch instrument 302, by the digitizer, and/or by the touch device. Various examples described herein include device agnostic examples that cover a wide variety of implementations, with signaling, detections, determinations, calculations, communications, etc., implemented by one or more devices and/or components involved in adaptive determination of tilt.

In some examples, the digitizer transmits electrostatic signals detected by tip sensor 324 and ring sensor(s) 326, and those signals are provided to orientation detector 312 to adapt the tilt determination to calculate tilt under detected conditions (e.g., SNRs for signals), with or without orientation information generated by gyroscope(s) 328. Orientation detector 312 may determine which tilt detector algorithm, equation, weights, etc., to use to adapt the tilt determination to the detected conditions, thereby enabling broad determination of tile under varying situations, including when the touch instrument is near a touch screen edge (and thus tip sensor 324 and/or ring sensor 326 signals may be weak), and/or when the SNR for a particular sensor is relatively weak (e.g., below a threshold value) and thus may have its weight reduced (or its value not utilized) by use of a selected tilt detection algorithm/equation. Orientation detector 312 may utilize LUT(s) 334 and/or tilt detector(s) 332 to adapt the tilt determination. Tilt detector(s) 332 includes one or more tilt detector algorithms, equations, and/or weights utilized by orientation detector 312 to determine a tilt of touch instrument 302 based on signals provided or received by tip sensor 324 and ring sensor(s) 326, and/or orientation information generated by gyroscope(s) 328.

For example, orientation detector 312 may be configured to receive information, such as signal energy(ies) detected for one or more communication signals (e.g., from a touch device) received by touch instrument 302 (e.g., via tip sensor 324 and/or ring sensor(s) 326 through electrostatic interface(s) 322 and/or via network interface(s) 320). Antennas (e.g., tip sensor 324 and/or ring sensor(s) 326) may have a known position and orientation relative to touch instrument 302. Orientation detector 312 may be configured to determine orientation (e.g., tilt) of touch instrument 302 with respect to a touch device based on various communication signal energies received at multiple antennas (e.g., tip sensor 324 and/or ring sensor(s) 326). In an example, differences in durations of signal flight prior to reception by antennas may be used to determine orientation.

In some examples, the digitizer may detect signals generated by tip sensor 324 and ring sensor(s) 326 and/or may receive orientation information generated by gyroscope(s) 328 via network interface(s) 320. The digitizer may include an orientation detector (e.g., tilt detector) that determines tilt. The digitizer may provide the tilt determination to device manager 308 (e.g., orientation detector 312) via network interface(s) 320 or electrostatic interface(s) 322.

In some examples, touch device may perform adaptive tilt determinations and provide the determinations to the digitizer and/or to touch instrument 302. The touch device may include an orientation detector (e.g., tilt detector) that determines tilt. The digitizer may provide the tilt determination to device manager 308 (e.g., orientation detector 312) via network interface(s) 320 or electrostatic interface(s) 322.

In still other examples, touch instrument 302, digitizer, and/or touch device may cooperatively perform operations related to adaptive tilt determinations. As these examples demonstrate, adaptive tilt determination may be cooperatively implemented by a variety of components in a variety of devices, which may be selected to perform tasks based on efficiency, time constraints, processing capacity, and/or other design criteria.

Position detector 310 and orientation detector 312 may provide a common resource for sensor manager 314, inking manager 316, power manager 318, and device manager 308 to apply control logic to position and orientation information/data, which may be buffered (e.g., stored), for example, in memories/storage 306 for access by sensor manager 314, inking manager 316, power manager 318, and device manager 308.

Sensor manager 314 manages one or more sensors, such as gyroscope(s) 328, which may be prone to drift, requiring recalibration. Sensor manager 314 may be configured to periodically activate gyro(s) 328 (e.g., if inactive) to calibrate gyro(s) 328 using orientation (e.g., tilt) determined based on signals provided by or received by tip sensor 324 and ring sensor(s) 326.

Inking manager 316 may be configured to generate commands to activate and deactivate inking operations at a touch device (e.g., touch device 104). In an example, inking manager 316 may generate an activation command or a deactivation command for inking operations at a touch device, for example, based on position (e.g., and orientation) data. Commands generated by inking manager 316 may include information related to the type of inking operation to be performed, the location of touch instrument 302 relative to the touch device or its digitizer, the orientation of the touch instrument 302, etc.

Power manager 318 manages power supplied (e.g., by battery 330) to a variety of components, such as gyroscope(s) 328 and ring sensor(s) 326. Power manager 318 may activate components as needed and deactivate components as they are not needed. Power manager 318 may have access to information about the state of touch instrument 302, which may be indicated by information generated by other components, such as position detector 310, orientation detector 312, sensor manager 314, inking manager 316, etc. Accordingly, power manager 318 may be aware of components that are in use and that are not in use. For example, power manager 318 may deactivate gyroscope(s) 328 (e.g., or ring sensor(s) 326) when not involved in the determination of tilt by orientation detector 312. Periodic activations and deactivations may conserve power over time. Power manager 318 may be called on by other components to activate components as needed. For example, power manager 318 may activate gyro(s) 328 temporarily so that sensor manager 314 can calibrate gyro(s) 328. Power manager 318 may deactivate most components of touch instrument 302 (e.g., to place touch instrument 302 in a sleep mode), for example, during periods when a user is not using touch instrument 302.

Device manager 308 (e.g., position detector 310, orientation detector 312) may track (e.g., access) recent position and orientation data (e.g., in a data buffer represented by memory 306). The data may be used to determine a direction (increasing or decreasing hover height) and/or location (e.g., nearing or going beyond the border of digitizer) where SNR increases. Prevailing conditions (e.g., signal interference) and/or operating parameters (e.g., power consumption) may factor into adaptive tilt determinations. Device manager 308 (e.g., position detector 310, orientation detector 312) may use the information to proactively adapt tilt determinations.

Accordingly, touch instrument 302 and device manager 308 may operate in various ways to adapt tilt determinations. Additional examples regarding touch instrument 302 and its components (e.g., device manager 308, orientation detector 312), are provided below. In various embodiments, one or more components and/or subcomponents of touch instrument 302 may be included in a touch device, such as touch device 104, to perform corresponding functions therein. For example, touch device 104 may adapt orientation (e.g., tilt) determinations, determine orientation (e.g., tilt) and provide tilt data to touch instrument 302 or command touch instrument 302 to adapt its tilt determination, activate/deactivate used/unused components, calibrate gyro(s) 328, etc. Touch device (e.g., touch device 104) may be made aware of adaptive tilt determination capabilities of touch instrument 302.

FIG. 4 shows a block diagram of a touch device 404 configured for adaptive determination of stylus tilt, according to an example embodiment. Touch device 404 is an embodiment of touch device 104 (FIG. 1) and touch device 204 (FIG. 2). As shown in FIG. 4, touch device 404 is associated with a display unit 406, which may be integrated with touch device 404 or may be a peripheral display device. Display unit 406 includes a touch screen 408, a digitizer 410, a controller 418, and a memory 416. In the example shown, touch device 404 includes a host processor 436, a graphics processing unit (GPU) 438, a memory 424, and a network interface (I/F) 440. Touch device 404 is described in further detail as follows.

Memory 416 associated with controller 418 and digitizer 410 and memory 424 associated with touch device 404 show similar dashed components to indicate, as previously described, that all or part of adaptive stylus tilt may be implemented in or among multiple devices and/or components in a variety of examples. For example, memory 416 may store LUT(s) 412 and tilt detector(s) 414 for use by controller 418 (e.g., orientation detector 422) while memory 424 may store LUT(s) 426 and tilt detector(s) 428 for use by application(s) 432, operating system (OS) 434 (e.g., also stored by memory 424 and executed by host processor 436), which may implement an orientation (e.g., tilt) detector. Memory 424 may (e.g., also) store, for example, reports 430 provided by controller 418 based on signals detected by digitizer 410, which may include operational data, such as position of touch instrument 302, inking data, SNR of signals provided by tip sensor 324, ring sensor(s) 326, etc. Memory 416 and memory 424 may include any type of computer-readable media such as but are not limited to computer-readable storage media. Examples of computer-readable storage media include, but are not limited to, a read only memory (ROM), a random access memory (RAM), a register, cache memory, semiconductor memory devices, magnetic media such as, but not limited to, internal hard disks and removable disks, magneto-optical media, and/or optical media such as compact disc (CD)-ROM disks, and/or digital versatile disks (DVDs).

Touch device 404 is any type of stationary or mobile computing device, including a mobile computer or mobile computing device, a mobile phone, a wearable computing device, or other type of mobile device, or a stationary computing device such as a desktop computer or PC (personal computer), or a server. Touch device 404 may include one or more applications 432, operating systems 434, virtual machines (VMs), storage devices (e.g., memory 424), etc., that are executed, hosted, and/or stored therein or via one or more other computing devices via network(s) (not shown). Touch device 404 may execute one or more processes in one or more computing environments. A process is any type of executable (e.g., binary, program, application) that is being executed by touch device 404. A process may include an automated pairing process, e.g., between touch device 404 and a touch instrument (e.g., touch instrument (stylus) 102, 202, 302), or an application that receives touch input. A computing environment may be any computing environment (e.g., any combination of hardware, software, and firmware). An example computing device with example features is presented in FIG. 10.

Touch device 404 communicates with (e.g., integrated or peripheral) display unit 406 to display imagery to a user, such as by displaying a user's touch input as feedback as the user is providing the touch input. Touch device 404 includes host processor 436 configured to execute software application(s) 432 that cause content, such as touch input, to be displayed to users via display unit 406. Touch device 404 may also be configured to display content generated by remotely executed software applications. Touch device 404 may include GPU 438, which is configured to render video for display by display unit 406, for example, to free up host processor 436 to perform other processing.

Display unit 406 includes touch screen 408 as a display device and input device for user input (e.g., by touch and/or use of a stylus 102, 202, 302). Touch screen 408 may include an integrated touch interface (e.g., touch screen or touch pad) or a peripheral touch interface. Touch screen 408 is utilized by users through interaction with touch instruments, such as stylus 102, 202, 302, e.g., to perform inking operations.

Digitizer 410 provides a user input area, converting analog user input into digital signals for processing by controller 418. Digitizer 410 communicates with controller 418, which includes a digitizer processor (e.g., microcontroller). Digitizer 410, or a portion thereof, is built into touch screen 408, thereby allowing a user to interact with displayed images.

Digitizer 410 is implemented as an antenna array (e.g., a two-dimensional array of antenna elements/electrodes) or in another array of sensors. Digitizer 410 detects interactions and communications (e.g., commands and/or information) associated with user input operations, e.g., using stylus 102, 202, 302. For example, digitizer 410 may be configured to receive/transmit communication signals from/to stylus 102, 202, 302. Antennas (e.g., electrodes) in digitizer 410 detect energy (e.g., coupling and transmission energy) associated with operations using stylus 102, 202, 302. Digitizer 410 detects energy in a variety of forms and sources, such as wirelessly transmitted signals conveying information (e.g., haptic parameters) in modulated RF signals, electrostatic coupling, etc. Digitizer 410 detects touch-related operations with contact (e.g., zero (0) hover height) or without contact (e.g., hover height > 0). Digitizer 410 generates signals indicative of user input for processing by controller (e.g., digitizer processor) 418. Digitizer 410 also signals touch instrument 102, 202, 302. For example, digitizer 418 can transmit signals to and receive signals from tip sensor 324 and ring sensor(s) 326, which may be used by controller 418 (e.g., orientation detector 422) to perform adaptive stylus tilt determinations.

Controller 418 includes a digitizer processor (e.g., a touch controller (TC)) configured to process (e.g., at least in part) signals generated by digitizer 410, e.g., in response to user interaction with the user input area of touch screen 408. Controller 418 receives and processes signals indicative of interactions and communications (e.g., commands and/or information) associated with touch instrument 102, 202, 302, for example, to determine when and/or where to implement inking operations, erasing operations, provide feedback (e.g., haptic, visual), etc. Controller 418 may determine interactions and communications by processing energy detected by digitizer 410. Controller 418 generates inking data representative of detected input operations, which is provided to touch device (e.g., operating system 434, GPU 438) to display on touch screen 408.

In some examples, controller 418 is configured to determine an orientation (e.g., tilt) of touch instrument 102, 202, 302 (e.g., relative to a touch device 404). Controller 418 may be configured with position detector 420 and orientation detector 422 (e.g., similar to touch instrument 302 configured with position detector 310 and orientation detector 312 in some examples). Controller 418 may be configured to determine an orientation (e.g., tilt) of touch instrument 102, 202, 302 based on determined, detected, measured, and/or received information. Digitizer 410 may detect signals generated by tip sensor 122, 222, 324 and ring sensor(s) 120, 220, 326 and/or may receive orientation information generated by gyroscope(s) 114, 214, 328 via network I/F 440 and host processor 436. Orientation detector 422 adapts tilt determinations to the detected conditions indicated by the signals by selecting which tilt detector algorithm, equation, weights, etc., to use for the current tilt determination. The digitizer 410 may provide the tilt determination to device manager 116, 216, 308 (e.g., orientation detector 312) via host processor 436 and network interface(s) 320 or via tip sensor 122, 222, 324 or ring sensor(s) 120, 220, 326, and electrostatic interface(s) 322.

In some examples, controller 418 causes digitizer 410 to transmit electrostatic signals detected by tip sensor 122, 222, 324 and ring sensor(s) 120, 220, 326, and those signals are provided to orientation detector 312 to adapt the tilt determination to calculate tilt under detected conditions (e.g., SNRs for signals), with or without orientation information generated by gyroscope(s) 114, 214, 328. Orientation detector 312 adapts tilt determinations to the detected conditions indicated by the signals by selecting which tilt detector algorithm, equation, weights, etc., to use for the current tilt determination.

Controller 418 may use position detector 420 to determine the position of touch instrument 102, 202, 302 relative to digitizer 410/touch screen 408. In some examples, controller 418 may send position information to touch instrument 102, 202, 302 for use by device manager 308 related to one or more determinations related to adaptive tilt, power management, or sensor management. For example, digitizer 410 may transmit information to touch instrument 302 to indicate the touch instrument 302 is too far away or out of bounds, causing low SNR for signals provided by tip sensor 324 and/or ring sensor(s) 326, allowing touch instrument 302 (e.g., orientation detector 312) to adapt tilt determination (e.g., by utilizing orientation information generated by gyroscope(s) 328 in the current tilt determination). In some examples, controller 418 may use position and orientation information to make one or more determinations related to adaptive tilt, power management, sensor management. Controller 418 may send the determinations to touch instrument 102, 202, 302 to execute the determinations.

Host processor 436 executes operating system 434 and application(s) 432, which may utilize inking data generated by controller (e.g., digitizer processor) 418. The inking data may be used to display imagery representative of inputs made using touch instrument 102, 202, 302. For example, software application(s) 432 may respond to inking data indicative of user touch input (e.g., inking operations) by causing GPU 436 to display on display unit 406 (e.g., touch screen 408) a representation of the touch input. User input in user input area of digitizer 410 is displayed, for example, by mapping the user input area of digitizer 410 to an area of a display (e.g., touch screen 408).

In some examples, reports 430 provided by digitizer 410 to touch device 404 with touch instrument signal information detected by digitizer 410 may include information (e.g., touch instrument signal SNR, instrument position) that may be utilized by touch device 404 to determine tilt, power management, and/or sensor management for touch instrument 102, 202, 302. Application(s) 432 or OS 434 executed by host processor 436 may perform adaptive determination of touch instrument tilt, e.g., using tilt detector(s) 428. Touch device 404 may provide the adaptive tilt determinations to the digitizer 410 and/or to touch instrument 302 (e.g., via network I/F 440 to network I/F 320).

Regardless of where adaptive tilt determinations are made (e.g., orientation detector 312, orientation detector 420, application(s) 432, OS 434), adaptation of tilt determinations may fuse information based on signal SNR for signals between touch instrument 302 and digitizer 410 with orientation information generated by gyroscope(s) 328 to determine tilt of touch instrument 302 from one time to the next time. For example, tilt may be determined based on characteristics of signals provided or received by tip sensor 324 and ring sensor(s) 326 when touch instrument 302 is inside the border of digitizer 410, when touch instrument 302 is within a hover distance range of digitizer 410, and/or when there is no to low noise. Tilt may be determined based on orientation information generated by gyroscope(s) 328 when touch instrument 302 is outside the border of digitizer 410, when touch instrument 302 is beyond a hover distance range of digitizer 410, and/or when there is high noise. Otherwise, tilt may be determined based on a blending or correction of orientation information based on characteristics of signals provided or received by tip sensor 324 and ring sensor(s) 326 and orientation information generated by gyroscope(s) 328. A blending or correction of orientation information may be looked up, for example, in LUT(s) 334, 412, 426, which may represent a logic table, to correlate tilt determination based on measurements/calculations. Such a correction increases tilt determination accuracy by enabling predetermined correction information for various conditions (e.g., touch screen edge, touch instrument hover) to be stored and accessed for tilt determination adjustment. Also, drift of gyro(s) 328 may be corrected (e.g., by sensor manager 314) using orientation information based on the characteristics of signals provided or received by tip sensor 324 and ring sensor(s) 326. Also, components that are not in use for drift calculations (e.g., gyro(s) 328 or ring sensor(s) 326) may be activated/deactivated (e.g., by power manager 318) to conserve power based on the variables used in tilt determinations for one or more cycles.

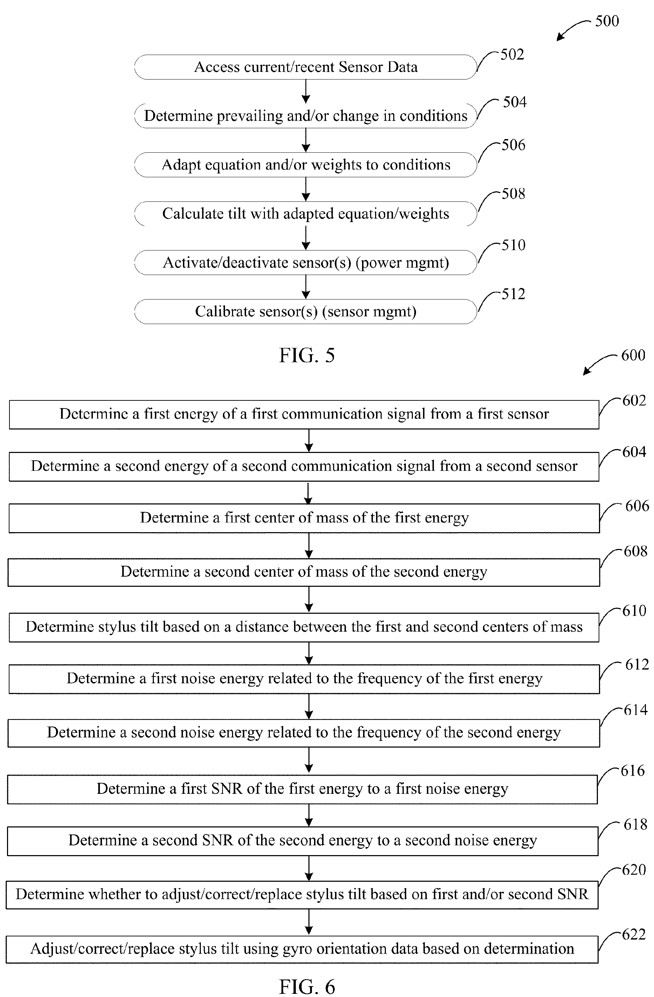

Embodiments may also be implemented in processes or methods. For example, FIG. 5 shows a flowchart for a method 500 for adaptive determination of stylus tilt, adaptive gyro drift correction, and adaptive power management, in accordance with an example embodiment. Embodiments disclosed herein and other embodiments may operate in accordance with examples shown in FIGS. 1-4. Method 500 comprises steps 502-512. However, other embodiments may operate according to other methods. Other structural and operational embodiments will be apparent to persons skilled in the relevant art(s) based on the foregoing discussion of embodiments. No order of steps is required unless expressly indicated or inherently required. There is no requirement that a method embodiment implement all of the steps illustrated in FIG. 5. FIG. 5 is simply one of many possible embodiments. Embodiments may implement fewer, more or different steps.

Method 500 may represent, for example, execution of a data fusion algorithm that adjusts the contributions of each of multiple sensors (e.g., gyro orientation data, tip sensor data, ring sensor data) in an equation (e.g., tilt detector equation) to maintain, improve, or optimize the accuracy of tilt determinations as conditions change (e.g., x,y location, vertical spacing/distance of separation, noise, SNRs, remaining battery power).

Method 500 comprises step 502. In step 502, current/recent sensor data is accessed. For example, as shown in FIGS. 3-4, orientation detector 310, orientation detector 422, application(s) 432 or OS 434 accesses memory 306, memory 416, or memory 424, respectively, to access current or recent (e.g., current and recent past) sensor data, such as stylus position data, tip sensor energy, ring sensor energy, gyro orientation data, and noise energies at tip/ring frequencies, remaining battery power, which may be indicated, e.g., in part, in reports 430.

In step 504, prevailing conditions (e.g., scenario or situation) and/or a change in conditions is determined. For example, as shown in FIGS. 3-4, orientation detector 310, orientation detector 422, application(s) 432 or OS 434 use current/recent data to determine whether the location of tip sensor is already outside or near the border of the digitizer, determine tip sensor frequency SNR and ring sensor frequency SNR, determine whether the SNRs exceed threshold(s), etc. For example, SNR indicates one or more issues with tip/ring signals provided or detected by ring sensor(s) 326 and/or tip sensor 324, such as high hover, a noise issue, stylus located with ring tilted outside the plane of the digitizer border, etc.

In step 506, a tilt equation and/or weights is/are adapted, e.g., as needed, to the determined conditions or change in conditions. For example, as shown in FIGS. 3-4, orientation detector 310, orientation detector 422, application(s) 432 or OS 434 determine the equation and/or weights to use to determine tilt. For example, orientation detector 310, orientation detector 422, application(s) 432 or OS 434 may apply a set of determined prevailing conditions to a logic table in LUT(S) 334, 412, 426, respectively, to determine which equation and/or weights to apply to determine tilt. For example, orientation detector 310, orientation detector 422, application(s) 432 or OS 434 may select a tilt detector equation 332, 414 from memory 306 or memory 416 and apply weights provided by LUT(S) 334, 412, 426.

In step 508, tilt is calculated with the adapted equation/weights. For example, as shown in FIGS. 3-4, orientation detector 310, orientation detector 422, application(s) 432 or OS 434 use the equation (e.g., selected tilt detector 332, 414) and/or weights (e.g., given by the applicable LUT entry) adapted to the determined prevailing conditions to calculate tilt. For example, in response to an indication that tip and/or ring sensor signals are unreliable due to low SNR, a determination may be made to use orientation data generated by gyroscope(s) 328, resulting in determination of stylus tilt based on the orientation information from the gyroscope, whether in part by blending or in full by replacing tilt determined using orientation data determined using tip and ring sensor signals.

In step 510, one or more sensor(s) are activated/deactivated, as needed, for power management. For example, as shown in FIGS. 3, power manager 318 may activate or deactivate ring sensor(s) 326 and/or gyroscope(s) 328 based on the use of sensor data in one or more (e.g., consecutive) recent tilt calculations, based on an indication provided by controller 418, based on an indication from sensor manager (e.g., to activate gyro(s) 328 for calibration), etc.

In step 512, one or more gyro sensors are calibrated, as needed, for sensor management). For example, as shown in FIGS. 3-4, sensor manager 314 may calibrate gyro(s) 328 using orientation data determined based on reliable tip and ring sensor data.

FIG. 6 shows a flowchart of a method 600 for adaptive determination of stylus tilt, according to an example embodiment. Embodiments disclosed herein and other embodiments may operate in accordance with examples shown in FIGS. 1-4. Method 600 comprises steps 602-622. However, other embodiments may operate according to other methods. Other structural and operational embodiments will be apparent to persons skilled in the relevant art(s) based on the foregoing discussion of embodiments. No order of steps is required unless expressly indicated or inherently required. There is no requirement that a method embodiment implement all of the steps illustrated in FIG. 6. FIG. 6 is simply one of many possible embodiments. Embodiments may implement fewer, more or different steps.

Example method 600 shows an example of adaptive tilt, implementing a sensor fusion algorithm that adapts tilt determinations as conditions change, thereby maintaining tilt determination accuracy and improving user experience. Method 600 comprises step 602. In step 602, a first energy of a first communication signal from a first sensor is determined. For example, as shown in FIGS. 3-4, digitizer 410 determines the energy of an electrostatically induced RF signal provided by tip sensor 324.

In step 604, a second energy of a second communication signal from a second sensor is determined. For example, as shown in FIGS. 3-4, digitizer 410 determines the energy of one or more electrostatically induced RF signals provided by ring sensor(s) 326.

In step 606, a first center of mass of the first energy is determined. For example, as shown in FIGS. 3-4, controller 418 determines the center of mass of the signal provided by tip sensor 324.

In step 608, a second center of mass of the second energy is determined. For example, as shown in FIGS. 3-4, controller 418 determines the center of mass of the signal provided by ring sensor(s) 326.

In step 610, current stylus tilt is determined based on a distance between the first and second centers of mass. For example, as shown in FIGS. 3-4, orientation detector 422 uses a tilt detector to determine the tilt of touch instrument 302 based on a distance between the determined centers of mass of the signals provided by the tip sensor 324 and ring sensor(s) 326.

The portion of the algorithm from steps 602-610 results in accurate determination of tilt while the SNR of signals provided or detected by ring sensor 220 and tip sensor 222 are adequate (e.g., above a threshold). As the SNR of signals decrease (e.g., due to noise, increased distance, or position beyond digitizer border), the accuracy of determinations based on the signals, such as orientation (e.g., tilt) decrease, leading to adaptation of tilt determinations to changing conditions that cause inaccurate tilt determinations.

In step 612, a first noise energy related to the frequency of the first energy is determined. For example, as shown in FIGS. 3-4, controller 418 determines noise at the frequency of the signal provided by tip sensor 324.

In step 614, a second noise energy related to the frequency of the second energy is determined. For example, as shown in FIGS. 3-4, controller 418 determines noise at the frequency of the signal provided by ring sensor(s) 326.

In step 616, a first SNR of the first energy to a first noise energy is determined. For example, as shown in FIGS. 3-4, controller 418 determines the SNR of the signal provided by the tip sensor 324 compared to the noise detected at the frequency of the signal provided by the tip sensor 324.

In step 618, a second SNR of the second energy to a second noise energy is determined. For example, as shown in FIGS. 3-4, controller 418 determines the SNR of the signal provided by the ring sensor(s) 326 compared to the noise detected at the frequency of the signal provided by the ring sensor(s) 326.

In step 620, a determination is made whether to adjust/correct/replace stylus tilt based on first and/or second SNR. For example, as shown in FIGS. 3-4, orientation detector 422, determines the equation and/or weights to use to determine tilt. For example, orientation detector 422 may apply a set of determined prevailing conditions to a logic table in LUT(S) 412 to determine which equation and/or weights to apply to determine tilt. For example, orientation detector 422, may select a tilt detector equation 414 from memory 416 with applicable weights provided by LUT(S) 412.

In step 622, stylus tilt is adjusted/corrected/replaced using gyro orientation data based on the determination to adjust/correct/replace. For example, as shown in FIGS. 3-4, orientation detector 422 uses the equation (e.g., selected tilt detector 414) and/or weights (e.g., given by the applicable LUT entry in LUT(s) 412) adapted to the determined prevailing conditions to calculate tilt. For example, in response to an indication that tip and/or ring sensor signals are unreliable due to low SNR, a determination may be made to use orientation data generated by gyroscope(s) 328, resulting in determination of stylus tilt based on the orientation information generated by gyro(s) 328 that touch device 404 received via network interfaces 320, 440, whether in part by blending or in full by replacing tilt determined using orientation data determined using signals provided by tip and ring sensors 324, 326.

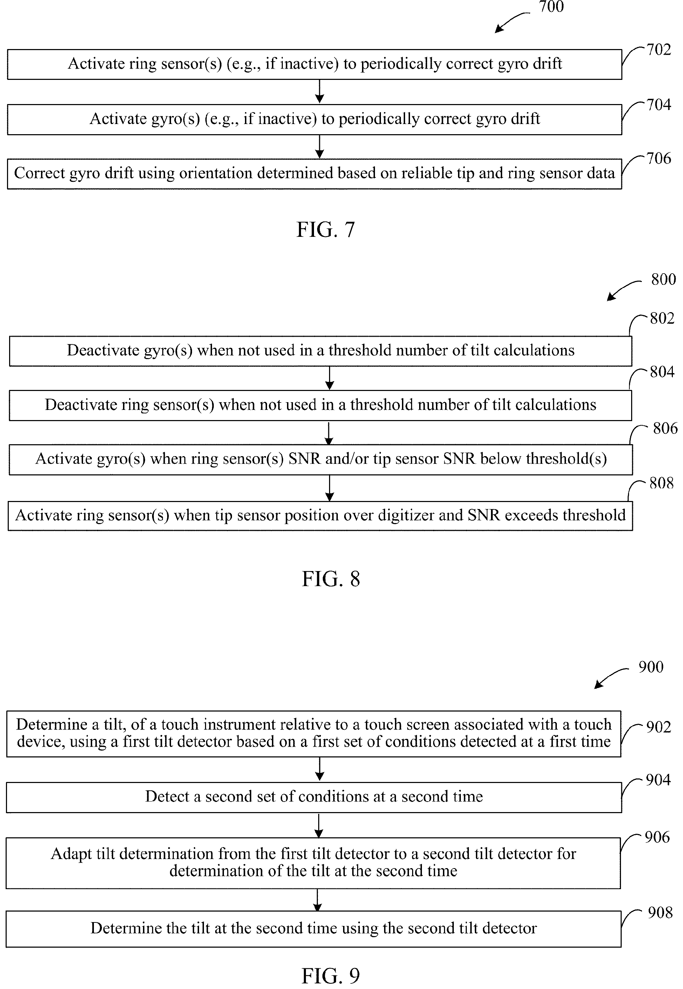

FIG. 7 shows a flowchart for a method 700 for adaptive gyro drift correction, in accordance with an example embodiment. Embodiments disclosed herein and other embodiments may operate in accordance with examples shown in FIGS. 1-4. Method 700 comprises steps 702-706. However, other embodiments may operate according to other methods. Other structural and operational embodiments will be apparent to persons skilled in the relevant art(s) based on the foregoing discussion of embodiments. No order of steps is required unless expressly indicated or inherently required. There is no requirement that a method embodiment implement all of the steps illustrated in FIG. 6. FIG. 6 is simply one of many possible embodiments. Embodiments may implement fewer, more or different steps.

Example method 700 shows an example of sensor management to support the continuity of tilt accuracy as conditions change, improving user experience. Method 700 comprises step 702. In step 702, ring sensor(s) are activated (e.g., if inactive), for example, to periodically correct gyro drift. For example, as shown in FIGS. 3-4, sensor manager 314 indicates to power manager 318 to activate ring sensor(s) 326, e.g., if inactive, so that sensor manager 314 can use a signal provided by ring sensor(s) 326 to generate tip/ring based orientation information for use in correcting gyro drift.

In step 704, gyro(s) are activated (e.g., if inactive) to periodically correct gyro drift. For example, as shown in FIGS. 3-4, sensor manager 314 indicates to power manager 318 to activate gyro(s) 328 (e.g., if inactive) so that sensor manager 314 can use tip/ring based orientation information to correct gyro drift periodically (e.g., every 500 ms).

In step 706, gyro drift is corrected using orientation determined based on reliable tip and ring sensor data. For example, as shown in FIGS. 3-4, sensor manager 314 accesses tip/ring based orientation information from memory 306 generated by orientation detector 312 or orientation detector 422 and uses the orientation information to reduce (e.g., partially or completely correct) gyro drift of gyro(s) 328. Periodic correction of gyro drift supports continuous accuracy in tilt determinations as conditions change

FIG. 8 shows a flowchart of a method 800 for adaptive power management, in accordance with an example embodiment. Embodiments disclosed herein and other embodiments may operate in accordance with examples shown in FIGS. 1-4. Method 800 comprises steps 802-808. However, other embodiments may operate according to other methods. Other structural and operational embodiments will be apparent to persons skilled in the relevant art(s) based on the foregoing discussion of embodiments. No order of steps is required unless expressly indicated or inherently required. There is no requirement that a method embodiment implement all of the steps illustrated in FIG. 8. FIG. 8 is simply one of many possible embodiments. Embodiments may implement fewer, more or different steps.

Example method 800 shows an example of power management to conserve the longevity of battery 330, improving user experience. Method 800 comprises step 802. In step 802, gyro(s) are deactivated when not used in a threshold number of tilt calculations. For example, as shown in FIGS. 3-4, power manager 318 deactivates gyro(s) 328 when orientation detector 312 does not use orientation information generated by gyro(s) 328 in a tilt detector equation for one or more (e.g., consecutive) threshold number of tilt determinations. Not using orientation information generated by gyro(s) 328 in a tilt detector equation may be given, for example, by a zero weight applied to orientation information generated by gyro(s) 328 in a tilt detector equation. For example, controller 418 may deactivate gyro(s) 328 when ring sensor data is reliable for accurate tilt determinations.

In step 804, ring sensor(s) are deactivated when not used in a threshold number of tilt calculations. For example, as shown in FIGS. 3-4, power manager 318 deactivates ring sensor(s) 326 when orientation detector 312 does not use orientation information generated by signals provided or received by ring sensor(s) 326 in a tilt detector equation for one or more (e.g., consecutive) threshold number of tilt determinations. Not using orientation information generated by signals provided or received by ring sensor(s) 326 in a tilt detector equation may be given, for example, by a zero weight applied to orientation information generated by signals provided or received by ring sensor(s) 326 in a tilt detector equation. For example, controller 418 may instruct touch instrument 302 to turn off ring sensor(s) 326 if the ring signal SNR is too low and the controller 418 uses only gyro orientation information to determine tilt.

In step 806, gyro(s) are activated when ring sensor(s) SNR and/or tip sensor SNR are below threshold(s). For example, as shown in FIGS. 3-4, power manager 318 activates gyro(s) 328 when device manager 308/orientation detector 312 determines that the SNR of signals provided and/or received by tip sensor 324 and/or ring sensor(s) 326 is too low to rely on alone to determine tilt.

In step 808, ring sensor(s) are activated when tip sensor position over digitizer and SNR exceeds threshold. For example, as shown in FIGS. 3-4, power manager 318 activates ring sensor(s) 326 when device manager 308 (e.g., position detector 310 and orientation detector 312) determines that the tip of touch instrument is positioned sufficiently within the borders of and in close enough proximity to digitizer 410, where noise is sufficiently low, such that the SNR of signals provided by tip sensor 324 (e.g., the strength/magnitude of tip signals) is high enough that tilt can be determined accurately using tip and ring signals.

An example of pseudocode may be as follows:

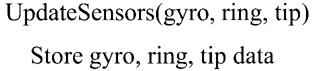

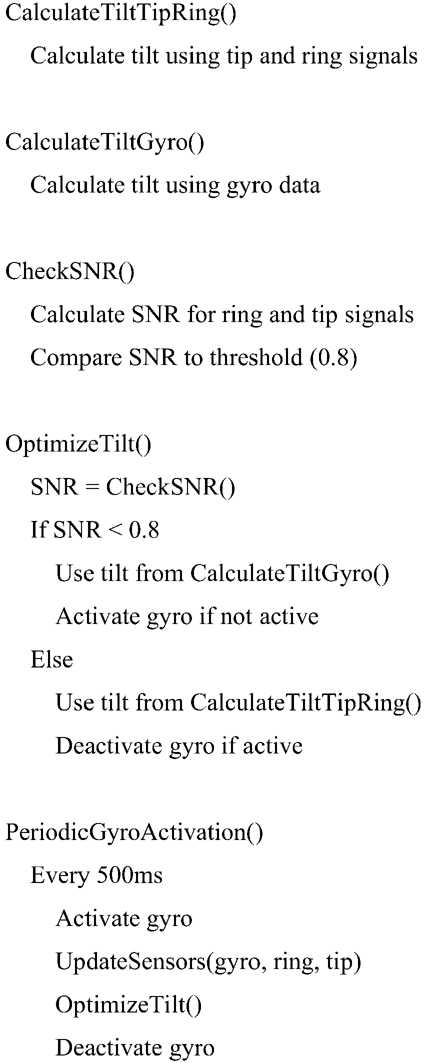

The pseudocode example illustrates one of many examples of operations in an example algorithm. In the example flow, the gyro is deactivated when the SNR of the tip and ring signals is greater than 0.8. The gyro is activated from time to time to correct gyro drift. In another example, which is not shown in the example pseudocode, the ring sensor may be deactivated while using gyro data to determine tilt. The ring is activated from time to time to generate data for use in correcting the gyro drift.

FIG. 9 shows example flowchart of a method 900 for adaptive determination of stylus tilt, according to an example embodiment. Embodiments disclosed herein and other embodiments may operate in accordance with examples shown in FIGS. 1-4. Method 900 comprises steps 902-906. However, other embodiments may operate according to other methods. Other structural and operational embodiments will be apparent to persons skilled in the relevant art(s) based on the foregoing discussion of embodiments. No order of steps is required unless expressly indicated or inherently required. There is no requirement that a method embodiment implement all of the steps illustrated in FIG. 9. FIG. 9 is simply one of many possible embodiments. Embodiments may implement fewer, more or different steps.

Method 900 comprises step 902. In step 902, tilt is determined for a touch instrument relative to a touch screen associated with a touch device using a first tilt detector based on a first set of conditions detected at a first time. For example, as shown in FIGS. 3-4, orientation detector 422 uses a first tilt detector 414 (e.g., with a first set of weights) selected based on conditions determined at a first time to calculate the tilt of touch instrument 302 relative to touch screen 408. For example, at the first time, the touch instrument 302 is positioned at the center of digitizer 410 with tip sensor 324 two (2) mm above touch screen 408, noise is low, and the SNRs of signals provided by tip and ring sensors 324, 326 are high.

In step 904, a second set of conditions is detected at a second time. For example, as shown in FIGS. 1-4, at the second time, user 130 is holding touch instrument 102, 202, 302 as shown in FIG. 1, with ring sensor 120, 220, 326 outside the boundary of digitizer 106, decreasing the SNR of ring electrostatic coupling signal 124 below a threshold.

In step 906, the tilt determination is adapted from the first tilt detector to a second tilt detector for determination of the tilt at the second time. For example, as shown in FIGS. 3-4, orientation detector 422 selects a second tilt detector 414 (e.g., the first tilt detector with a second set of weights) based on conditions determined at the second time for use in calculating the tilt of touch instrument 302 relative to touch screen 408. For example, orientation detector 422 may look up the second set of determined conditions in a logic table in LUT(S) 412 to determine the correlated equation and/or weights to apply to determine tilt. The equation (e.g., selected tilt detector 414) and/or weights may be given by the applicable LUT entry in LUT(s) 412) correlated with (e.g., adapted to) the determined set of conditions at the second time. For example, orientation detector 422, may select a tilt detector equation 414 from memory 416 with applicable weights provided by LUT(S) 412. The selected equation and/or weights may adapt the stylus tilt determination to use gyro orientation data. For example, in response to an indication that tip and/or ring sensor signals are unreliable due to low SNR, a determination may be made to use orientation data generated by gyroscope(s) 328, resulting in determination of stylus tilt based on the orientation information generated by gyro(s) 328 that touch device 404 received via network interfaces 320, 440, whether in part by blending or in full by replacing tilt determined using orientation data determined using signals provided by tip and ring sensors 324, 326.

In step 908, the tilt is determined at the second time using the second tilt detector. For example, as shown in FIGS. 3-4, orientation detector 422 uses the selected second tilt detector 414 (e.g., or the selected first tilt detector with a second set of weights) to calculate the tilt of touch instrument 302 relative to touch screen 408, thereby adaptively determining tilt to maintain the accuracy of tilt determinations as conditions change.

### III. Example Computing Device Embodiments

Touch instrument 102, 202, 302, touch device 104, 204, 404, controller 108, 418, device manager 116, 216, 308, LUT(s) 334, 412, 426, tilt detector(s) 332, 414, 428, position detector 310, 420, orientation detector 312, 422, sensor manager 314, inking manager 316, power manager 318, application(s) 432, OS 434, and flowcharts 500, 600, 700, 800 and 900, or components or modules thereof, are each implemented as computer program code/instructions configured to be executed in one or more processors and stored in a computer readable storage medium. Alternatively, touch instrument 102, 202, 302, touch device 104, 204, 404, controller 108, 418, device manager 116, 216, 308, LUT(s) 334, 412, 426, tilt detector(s) 332, 414, 428, position detector 310, 420, orientation detector 312, 422, sensor manager 314, inking manager 316, power manager 318, application(s) 432, OS 434, and flowcharts 500, 600, 700, 800 and 900, or components or modules thereof, are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 10. FIG. 10 shows a block diagram of an exemplary computing environment 1000 that includes a computing device 1002. Computing device 1002 is an example of each of touch instrument 102, 202, 302, touch device 104, 204, 404, and controller 108, 418, which may each include one or more of the components of computing device 1002. In some embodiments, computing device 1002 is communicatively coupled with devices (not shown in FIG. 10) external to computing environment 1000 via network 1004. Network 1004 comprises one or more networks such as local area networks (LANs), wide area networks (WANs), enterprise networks, the Internet, etc. In examples, network 1004 includes one or more wired and/or wireless portions. In some examples, network 1004 additionally or alternatively includes a cellular network for cellular communications. Computing device 1002 is described in detail as follows.

Computing device 1002 is any of a variety of types of computing devices. Examples of computing device 1002 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1002 is a stationary computing device such as a desktop computer, a personal computer (PC), a stationary server device, a minicomputer, a mainframe, a supercomputer, etc.

As shown in FIG. 10, computing device 1002 includes a variety of hardware and software components, including a processor 1010, a storage 1020, a graphics processing unit (GPU) 1042, a neural processing unit (NPU) 1044, one or more input devices 1030, one or more output devices 1050, one or more wireless modems 1060, one or more wired interfaces 1080, a power supply 1082, a location information (LI) receiver 1084, and an accelerometer 1086. Storage 1020 includes memory 1056, which includes non-removable memory 1022 and removable memory 1024, and a storage device 1088. Storage 1020 also stores an operating system 1012, application programs 1014, and application data 1016. Wireless modem(s) 1060 include a Wi-Fi modem 1062, a Bluetooth modem 1064, and a cellular modem 1066. Output device(s) 1050 includes a speaker 1052 and a display 1054. Input device(s) 1030 includes a touch screen 1032, a microphone 1034, a camera 1036, a physical keyboard 1038, and a trackball 1040. Not all components of computing device 1002 shown in FIG. 10 are present in all embodiments, additional components not shown may be present, and in a particular embodiment any combination of the components are present. In examples, components of computing device 1002 are mounted to a circuit card (e.g., a motherboard) of computing device 1002, integrated in a housing of computing device 1002, or otherwise included in computing device 1002. The components of computing device 1002 are described as follows.

In embodiments, a single processor 1010 (e.g., central processing unit (CPU), microcontroller, a microprocessor, signal processor, ASIC (application specific integrated circuit), and/or other physical hardware processor circuit) or multiple processors 1010 are present in computing device 1002 for performing such tasks as program execution, signal coding, data processing, input/output processing, power control, and/or other functions. In examples, processor 1010 is a single-core or multi-core processor, and each processor core is single-threaded or multithreaded (to provide multiple threads of execution concurrently). Processor 1010 is configured to execute program code stored in a computer readable medium, such as program code of operating system 1012 and application programs 1014 stored in storage 1020. The program code is structured to cause processor 1010 to perform operations, including the processes/methods disclosed herein. Operating system 1012 controls the allocation and usage of the components of computing device 1002 and provides support for one or more application programs 1014 (also referred to as "applications" or "apps"). In examples, application programs 1014 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1010 includes one or more general processors (e.g., CPUs) configured with or coupled to one or more hardware accelerators, such as one or more NPUs 1044 and/or one or more GPUs 1042.

Any component in computing device 1002 can communicate with any other component according to function, although not all connections are shown for ease of illustration. For instance, as shown in FIG. 10, bus 1006 is a multiple signal line communication medium (e.g., conductive traces in silicon, metal traces along a motherboard, wires, etc.) present to communicatively couple processor 1010 to various other components of computing device 1002, although in other embodiments, an alternative bus, further buses, and/or one or more individual signal lines is/are present to communicatively couple components. Bus 1006 represents one or more of any of several types of bus structures, including a memory bus or memory controller, a peripheral bus, an accelerated graphics port, and a processor or local bus using any of a variety of bus architectures.

Storage 1020 is physical storage that includes one or both of memory 1056 and storage device 1088, which store operating system 1012, application programs 1014, and application data 1016 according to any distribution. Non-removable memory 1022 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1022 includes main memory and is separate from or fabricated in a same integrated circuit as processor 1010. As shown in FIG. 10, non-removable memory 1022 stores firmware 1018 that is present to provide low-level control of hardware. Examples of firmware 1018 include BIOS (Basic Input/Output System, such as on personal computers) and boot firmware (e.g., on smart phones). In examples, removable memory 1024 is inserted into a receptacle of or is otherwise coupled to computing device 1002 and can be removed by a user from computing device 1002. Removable memory 1024 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 1088 are present that are internal and/or external to a housing of computing device 1002 and are or are not removable. Examples of storage device 1088 include a hard disk drive, a SSD, a thumb drive (e.g., a USB (Universal Serial Bus) flash drive), or other physical storage device.

One or more programs are stored in storage 1020. Such programs include operating system 1012, one or more application programs 1014, and other program modules and program data. Examples of such application programs include computer program logic (e.g., computer program code/instructions) for implementing touch instrument 102, 202, 302, touch device 104, 204, 404, controller 108, 418, device manager 116, 216, 308, LUT(s) 334, 412, 426, tilt detector(s) 332, 414, 428, position detector 310, 420, orientation detector 312, 422, sensor manager 314, inking manager 316, power manager 318, application(s) 432, OS 434, and flowcharts 500, 600, 700, 800 and 900, or components or modules thereof (and/or any individual operations/steps thereof).

Storage 1020 also stores data used and/or generated by operating system 1012 and application programs 1014 as application data 1016. Examples of application data 1016 include web pages, text, images, tables, sound files, video data, and other data. In examples, application data 1016 is sent to and/or received from one or more network servers or other devices via one or more wired or wireless networks. Storage 1020 is used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1002 through one or more input devices 1030 and receives information from computing device 1002 through one or more output devices 1050. Input device(s) 1030 includes one or more of touch screen 1032, microphone 1034, camera 1036, physical keyboard 1038, and/or trackball 1040 and output device(s) 1050 includes one or more of speaker 1052 and display 1054. Each of input device(s) 1030 and output device(s) 1050 are integral to computing device 1002 (e.g., built into a housing of computing device 1002) or are external to computing device 1002 (e.g., communicatively coupled wired or wirelessly to computing device 1002 via wired interface(s) 1080 and/or wireless modem(s) 1060). Further input devices 1030 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1054 displays information, as well as operating as touch screen 1032 by receiving user commands and/or other information (e.g., by touch, finger gestures, virtual keyboard, etc.) as a user interface. Any number of each type of input device(s) 1030 and output device(s) 1050 are present, including multiple microphones 1034, multiple cameras 1036, multiple speakers 1052, and/or multiple displays 1054.

In embodiments where GPU 1042 is present, GPU 1042 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1042 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1044 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 1028. In an example, NPU 1044 is configured for a data-driven parallel computing and is highly efficient at processing massive multimedia data such as videos and images and processing data for neural networks. NPU 1044 is configured for efficient handling of AI-related tasks, such as speech recognition, background blurring in video calls, photo or video editing processes like object detection, etc.

In embodiments disclosed herein that implement ML models, NPU 1044 can be utilized to execute such ML models, of which MLM 1028 is an example. For instance, where applicable, MLM 1028 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1044 is used to train MLM 1028. To train MLM 1028, training data is that includes input features (attributes) and their corresponding output labels/target values (e.g., for supervised learning) is collected. A training algorithm is a computational procedure that is used so that MLM 1028 learns from the training data. Examples of training inputs for ML model training include user position, angle, gesture, time of day, location, user crypto, etc. Parameters/weights are internal settings of MLM 1028 that are adjusted during training by the training algorithm to reduce a difference between predictions by MLM 1028 and actual outcomes (e.g., output labels). In some examples, MLM 1028 is set with initial values for the parameters/weights. A loss function measures a dissimilarity between predictions by MLM 1028 and the target values, and the parameters/weights of MLM 1028 are adjusted to minimize the loss function. The parameters/weights are iteratively adjusted by an optimization technique, such as gradient descent. In this manner, MLM 1028 is generated through training by NPU 1044 to be used to generate inferences based on received input feature sets for particular applications. MLM 1028 is generated as a computer program or other type of algorithm configured to generate an output (e.g., a classification, a prediction/inference) based on received input features and is stored in the form of a file or other data structure.

In examples, such training of MLM 1028 by NPU 1044 is supervised or unsupervised. According to supervised learning, input objects (e.g., a vector of predictor variables) and a desired output value (e.g., a human-labeled supervisory signal) train MLM 1028. The training data is processed, building a function that maps new data on expected output values. Example algorithms usable by NPU 1044 to perform supervised training of MLM 1028 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 1028 is an LLM, MLM 1028 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1028 is trained to learn patterns from unlabeled data. For instance, in embodiments where MLM 1028 implements unsupervised learning techniques, MLM 1028 identifies one or more classifications or clusters to which an input belongs. During a training phase of MLM 1028 according to unsupervised learning, MLM 1028 tries to mimic the provided training data and uses the error in its mimicked output to correct itself (i.e., correct weights and biases). In further examples, NPU 1044 perform unsupervised training of MLM 1028 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1044 need not necessarily be present in all ML model embodiments. In embodiments where ML models are present, any one or more of processor 1010, GPU 1042, and/or NPU 1044 can be present to train and/or execute MLM 1028.

One or more wireless modems 1060 can be coupled to antenna(s) (not shown) of computing device 1002 and can support two-way communications between processor 1010 and devices external to computing device 1002 through network 1004, as would be understood to persons skilled in the relevant art(s). Wireless modem 1060 is shown generically and can include a cellular modem 1066 for communicating with one or more cellular networks, such as a GSM network for data and voice communications within a single cellular network, between cellular networks, or between the mobile device and a public switched telephone network (PSTN). In examples, wireless modem 1060 also or alternatively includes other radio-based modem types, such as a Bluetooth modem 1064 (also referred to as a "Bluetooth device") and/or Wi-Fi modem 1062 (also referred to as an "wireless adaptor"). Wi-Fi modem 1062 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1064 is configured to communicate with another Bluetooth-capable device according to the Bluetooth short-range wireless technology standard(s) such as IEEE 802.15.1 and/or managed by the Bluetooth Special Interest Group (SIG).

Computing device 1002 can further include power supply 1082, LI receiver 1084, accelerometer 1086, and/or one or more wired interfaces 1080. Example wired interfaces 1080 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1080 of computing device 1002 provide for wired connections between computing device 1002 and network 1004, or between computing device 1002 and one or more devices/peripherals when such devices/peripherals are external to computing device 1002 (e.g., a pointing device, display 1054, speaker 1052, camera 1036, physical keyboard 1038, etc.). Power supply 1082 is configured to supply power to each of the components of computing device 1002 and receives power from a battery internal to computing device 1002, and/or from a power cord plugged into a power port of computing device 1002 (e.g., a USB port, an A/C power port). LI receiver 1084 is useable for location determination of computing device 1002 and in examples includes a satellite navigation receiver such as a Global Positioning System (GPS) receiver and/or includes other type of location determiner configured to determine location of computing device 1002 based on received information (e.g., using cell tower triangulation, etc.). Accelerometer 1086, when present, is configured to determine an orientation of computing device 1002.

Note that the illustrated components of computing device 1002 are not required or all-inclusive, and fewer or greater numbers of components can be present as would be recognized by one skilled in the art. In examples, computing device 1002 includes one or more of a gyroscope, barometer, proximity sensor, ambient light sensor, digital compass, etc. In an example, processor 1010 and memory 1056 are co-located in a same semiconductor device package, such as being included together in an integrated circuit chip, FPGA, or system-on-chip (SOC), optionally along with further components of computing device 1002.

In embodiments, computing device 1002 is configured to implement any of the above-described features of flowcharts herein. Computer program logic for performing any of the operations, steps, and/or functions described herein is stored in storage 1020 and executed by processor 1010.

In some embodiments, server infrastructure 1070 is present in computing environment 1000 and is communicatively coupled with computing device 1002 via network 1004. Server infrastructure 1070, when present, is a network-accessible server set (e.g., a cloud-based environment or platform). As shown in FIG. 10, server infrastructure 1070 includes clusters 1072. Each of clusters 1072 comprises a group of one or more compute nodes and/or a group of one or more storage nodes. For example, as shown in FIG. 10, cluster 1072 includes nodes 1074. Each of nodes 1074 are accessible via network 1004 (e.g., in a "cloud-based" embodiment) to build, deploy, and manage applications and services. In examples, any of nodes 1074 is a storage node that comprises a plurality of physical storage disks, SSDs, and/or other physical storage devices that are accessible via network 1004 and are configured to store data associated with the applications and services managed by nodes 1074.

Each of nodes 1074, as a compute node, comprises one or more server computers, server systems, and/or computing devices. For instance, a node 1074 in accordance with an embodiment includes one or more of the components of computing device 1002 disclosed herein. Each of nodes 1074 is configured to execute one or more software applications (or "applications") and/or services and/or manage hardware resources (e.g., processors, memory, etc.), which are utilized by users (e.g., customers) of the network-accessible server set. In examples, as shown in FIG. 10, nodes 1074 includes a node 1046 that includes storage 1048 and/or one or more of a processor 1058 (e.g., similar to processor 1010, GPU 1042, and/or NPU 1044 of computing device 1002). Storage 1048 stores application programs 1076 and application data 1078. Processor(s) 1058 operates application programs 1076 which access and/or generate related application data 1078. In an implementation, nodes such as node 1046 of nodes 1074 operate or comprise one or more virtual machines, with each virtual machine emulating a system architecture (e.g., an operating system), in an isolated manner, upon which applications such as application programs 1076 are executed.

In embodiments, one or more of clusters 1072 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 1072 are included in a datacenter in a distributed collection of datacenters. In embodiments, exemplary computing environment 1000 comprises part of a cloud-based platform.

In an embodiment, computing device 1002 accesses application programs 1076 for execution in any manner, such as by a client application and/or a browser at computing device 1002.

In an example, for purposes of network (e.g., cloud) backup and data security, computing device 1002 additionally and/or alternatively synchronizes copies of application programs 1014 and/or application data 1016 to be stored at network-based server infrastructure 1070 as application programs 1076 and/or application data 1078. In examples, operating system 1012 and/or application programs 1014 include a file hosting service client configured to synchronize applications and/or data stored in storage 1020 at network-based server infrastructure 1070.

In some embodiments, on-premises servers 1092 are present in computing environment 1000 and are communicatively coupled with computing device 1002 via network 1004. On-premises servers 1092, when present, are hosted within an organization's infrastructure and, in many cases, physically onsite of a facility of that organization. On-premises servers 1092 are controlled, administered, and maintained by IT (Information Technology) personnel of the organization or an IT partner to the organization. Application data 1098 can be shared by on-premises servers 1092 between computing devices of the organization, including computing device 1002 (when part of an organization) through a local network of the organization, and/or through further networks accessible to the organization (including the Internet). Furthermore, in examples, on-premises servers 1092 serve applications such as application programs 1096 to the computing devices of the organization, including computing device 1002. Accordingly, in examples, on-premises servers 1092 include storage 1094 (which includes one or more physical storage devices such as storage disks and/or SSDs) for storage of application programs 1096 and application data 1098 and include a processor 1090 (e.g., similar to processor 1010, GPU 1042, and/or NPU 1044 of computing device 1002) for execution of application programs 1096. In some embodiments, multiple processors 1090 are present for execution of application programs 1096 and/or for other purposes. In further examples, computing device 1002 is configured to synchronize copies of application programs 1014 and/or application data 1016 for backup storage at on-premises servers 1092 as application programs 1096 and/or application data 1098.

Embodiments described herein may be implemented in one or more of computing device 1002, network-based server infrastructure 1070, and on-premises servers 1092. For example, in some embodiments, computing device 1002 is used to implement systems, clients, or devices, or components/subcomponents thereof, disclosed elsewhere herein. In other embodiments, a combination of computing device 1002, network-based server infrastructure 1070, and/or on-premises servers 1092 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1020. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules, or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1014) are stored in storage 1020. Such computer programs can also be received via wired interface(s) 1060 and/or wireless modem(s) 1060 over network 1004. Such computer programs, when executed or loaded by an application, enable computing device 1002 to implement features of embodiments discussed herein. Accordingly, such computer programs represent controllers of the computing device 1002.

Embodiments are also directed to computer program products comprising computer code or instructions stored on any computer-readable medium or computer-readable storage medium. Such computer program products include the physical storage of storage 1020 as well as further physical storage types.

### IV. Additional Example Embodiments

As described, systems and devices embodying the techniques herein may be configured and enabled in various ways to perform their respective functions. In embodiments, one or more of the steps or operations of any flowchart and/or flow diagram described herein may not be performed. Moreover, steps or operations in addition to or in lieu of those in any flowchart and/or flow diagram described herein may be performed. Further, in examples, one or more operations of any flowchart and/or flow diagram described herein may be performed out of order, in an alternate sequence, or partially (or completely) concurrently with each other or with other operations.

While embodiments described in the Sections above may be described in the context of touch devices, touch controllers, and touch instruments, e.g., a touch pen, stylus, etc., and touch inputs via touch interfaces, the embodiments herein are not so limited and may also be applied through other devices.

The additional examples and embodiments described in this Section may be applicable to examples disclosed in any other Section or subsection of this disclosure.

Methods, devices, systems, and computer program products are provided for adaptive determination of stylus tilt by selectively using gyroscopic and sensor data, which improves the accuracy of tilt determinations as signal conditions change, such as when the stylus is at high hover heights, at screen edges, and/or in noisy environments, while managing stylus power efficiency by powering down a sensor or the gyroscope when not used in a tilt calculation.

In examples, a device (e.g., touch instrument) comprises multiple sensors (e.g., tip/ring sensors) and a gyroscope, which are selectively used for accurate tilt determination, activated and deactivated as needed for tilt determination and power management, and used to correct gyroscopic drift to maintain gyroscope accuracy.

In one aspect, a device (e.g., stylus and/or touch device) comprises an orientation detector configured to determine a tilt, of a touch instrument relative to a touch screen associated with a touch device, using a first tilt detector based on a first set of conditions detected at a first time. The device is configured to detect a second set of conditions at a second time. The device is configured to adapt tilt determination from the first tilt detector to a second tilt detector for determination of the tilt at the second time (e.g., to optimize tilt determination accuracy). The device is configured to determine the tilt at the second time using the second tilt detector. Adaptive tilt detection can vary tilt calculations in a variety of ways, such as by using different equations, using the same equation with different weights, averaging or otherwise blending the results of calculations by multiple equations, etc.

In another aspect, the device can use sensor signals to periodically correct gyroscopic drift to maintain the accuracy of tilt detection when tilt detectors use orientation information generated by the gyroscope.

In another aspect, power can be conserved in the touch instrument by reducing or turning off power to at least one of the gyroscope or the second sensor when not utilized by the selected tilt detection calculation.

In an example, a device (e.g., a touch instrument and/or a touch device) may comprise, for example, an orientation detector configured to: determine a tilt, of a touch instrument relative to a touch screen associated with a touch device, using a first tilt detector based on a first set of conditions detected at a first time; detect a second set of conditions at a second time; adapt tilt determination from the first tilt detector to a second tilt detector for determination of the tilt at the second time (e.g., to optimize tilt determination accuracy); and determine the tilt at the second time using the second tilt detector.

In examples, the device comprises the touch device.

In examples, the device comprises the touch instrument.

In examples, the device comprises the touch device and the touch instrument.

In examples, the touch instrument comprises: a first (e.g., tip) sensor configured to provide a first signal to the touch device; a second (e.g., ring) sensor configured to provide a second signal to the touch device; and a gyroscope configured to generate orientation information. The first and second tilt detectors differ in terms of at least one of a use of or weights applied to at least one of a first measurement associated with the first signal, a second measurement associated with the second signal, or the orientation information. For example, the first tilt detector calculates the tilt based on the first and second signals. For example, the second tilt detector calculates the tilt based, at least in part, on the orientation information. For example, the first and second tilt detectors use the same equation but apply at least one different weight to at least one variable. In some examples, the first and second tilt detectors apply both equations and blend (e.g., average) the tilt determination or override one tilt determination with another tilt determination. In some examples, the second tilt detector applies a correction to a tilt determination to the first tilt determination. For example, the first tilt detector comprises variables based on first and second signals (e.g., tip/ring sensor signals) and the second tilt detector comprises a variable based on gyroscope sensor data.

In examples, the device may further comprise a power manager configured to conserve power in the touch instrument by reducing or turning off power to at least one of the gyroscope or the second sensor when the orientation information or the second signal, respectively, is not utilized to determine the tilt at the second time.

In examples, the device may further comprise a sensor manager configured to correct gyroscopic drift of the gyroscope using signals provided by the first and second sensors.

In examples, the adaptation of the tilt determination from the first tilt detector to the second tilt detector is based on a signal to noise ratio (SNR) for at least one of the first signal (e.g., tip sensor signal) or the second signal (e.g., ring sensor signal) at the second time compared to at least one threshold. Low SNR indicates the detected position of the touch instrument relative to the touch screen is too far away (e.g., too high and/or too far outside digitizer boundaries) and/or high noise.

In examples, the second tilt detector applies a correction to a tilt determined by the first tilt detector.

In examples, the first and second tilt detectors utilize at least one different weight applied to at least one variable.

In examples, the first and second tilt detectors utilize different equations to calculate tilt.

In an example, a method comprises determining a tilt, of a touch instrument relative to a touch screen associated with a touch device, using a first tilt detector based on a first set of conditions detected at a first time; detecting a second set of conditions at a second time; adapting tilt determination from the first tilt detector to a second tilt detector for determination of the tilt at the second time; and determining the tilt at the second time using the second tilt detector.

In examples, the first and second detectors differ in terms of at least one of a use of or weights applied to at least one of a first measurement associated with a first signal provided by a first sensor, a second measurement associated with a second signal provided by a second sensor, or orientation information provided by a gyroscope.

In examples, the method further comprises conserving power in the touch instrument by reducing or turning off power to at least one of the gyroscope or the second sensor when the orientation information or the second signal, respectively, is not utilized to determine the tilt at the second time.

In examples, the method further comprises correcting gyroscopic drift of the gyroscope using signals provided by the first and second sensors.

In examples, the method further comprises determining or selecting weights applied to variables in the second tilt detector (e.g., use the same equation with same variables with different weights).

In examples, the method further comprises selecting the second tilt detector from a plurality of tilt detectors (e.g., use different procedures/processes with different algorithms (steps/operations) or equations).

In an example, a computer-readable storage medium may have program instructions recorded thereon that, when executed by a processing circuit of a touch instrument, perform a method. In an example, the method may comprise, for example, determining a tilt, of a touch instrument relative to a touch screen associated with a touch device, using a first tilt detector based on a first set of conditions detected at a first time; detecting a second set of conditions at a second time; adapting tilt determination from the first tilt detector to a second tilt detector for determination of the tilt at the second time; and determining the tilt at the second time using the second tilt detector.

In examples, the first and second tilt detectors differ in terms of at least one of a use of or weights applied to at least one of a first measurement associated with a first signal provided by a first sensor, a second measurement associated with a second signal provided by a second sensor, or orientation information provided by a gyroscope.

In examples, the computer-readable storage medium further comprises conserving power in the touch instrument by reducing or turning off power to at least one of the gyroscope or the second sensor when the orientation information or the second signal, respectively, is not utilized to determine the tilt at the second time; or correcting gyroscopic drift of the gyroscope using signals provided by the first and second sensors.

In examples, methods, systems, devices, and computer program products are provided for adaptive determination of touch instrument tilt by selectively using gyroscopic and sensor data, which improves the accuracy of tilt determinations as signal conditions change, such as when the touch instrument is at high hover heights, at screen edges, and/or in noisy environments, while managing touch instrument power efficiency by powering down a sensor or the gyroscope when not used in a tilt calculation. Precision and power efficiency in touch instrument-based input devices are enhanced by dynamically adjusting the contribution of each sensor and intelligently managing power consumption. Compensation of gyroscopic drift with reliable sensor data supports seamless transitions in tilt calculations to seamlessly maintain tilt determination accuracy, especially at touch screen edges and in noisy environments.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on" and the term "based at least in part on."

While various embodiments of the present disclosure have been described above, it should be understood that they have been presented by way of example only, and not limitation. It will be understood by those skilled in the relevant art(s) that various changes in form and details may be made therein without departing from the spirit and scope of the invention as defined in the appended claims. Accordingly, the breadth and scope of the present invention should not be limited by any of the above-described exemplary embodiments, but should be defined only in accordance with the following claims and their equivalents.

## Claims

1. A device (102, 104, 204, 302, 404), comprising:
an orientation detector (312, 422) configured to:
determine a tilt, of a touch instrument (102, 202, 302) relative to a touch screen (112, 408) associated with a touch device (104, 204, 404), using a first tilt detector (332, 414, 428) based on a first set of conditions detected at a first time;
detect a second set of conditions at a second time;
adapt tilt determination from the first tilt detector (332, 414, 428) to a second tilt detector (332, 414, 428) for determination of the tilt at the second time; and
determine the tilt at the second time using the second tilt detector (332, 414, 428).

2. The device of claim 1, wherein the device comprises the touch device, or the touch instrument, or both.

3. The device of claim 2, when the device comprises the touch instrument, wherein the touch instrument comprises:
a first sensor configured to provide a first signal to the touch device;
a second sensor configured to provide a second signal to the touch device; and
a gyroscope configured to generate orientation information;
wherein the first and second tilt detectors differ in terms of at least one of a use of or weights applied to at least one of a first measurement associated with the first signal, a second measurement associated with the second signal, or the orientation information.

4. The device of claim 3, further comprising:
a power manager configured to conserve power in the touch instrument by reducing or turning off power to at least one of the gyroscope or the second sensor when the orientation information or the second signal, respectively, is not utilized to determine the tilt at the second time.

5. The device of claim 3, further comprising:
a sensor manager configured to correct gyroscopic drift of the gyroscope using signals provided by the first and second sensors.

6. The device of claim 3, wherein the adaptation of the tilt determination from the first tilt detector to the second tilt detector is based on a signal to noise ratio, 'SNR' for at least one of the first signal or the second signal at the second time compared to at least one threshold.

7. The device of any one of preceding claims, wherein the second tilt detector applies a correction to a tilt determined by the first tilt detector.

8. The device of any one of preceding claims, wherein the first and second tilt detectors utilize:
at least one different weight applied to at least one variable, or
different equations to calculate tilt.

9. A method (900), comprising:
determining (902) a tilt, of a touch instrument relative to a touch screen associated with a touch device, using a first tilt detector based on a first set of conditions detected at a first time;
detecting (904) a second set of conditions at a second time;
adapting (906) tilt determination from the first tilt detector to a second tilt detector for determination of the tilt at the second time; and
determining (908) the tilt at the second time using the second tilt detector.

10. The device of claim 9, wherein the first and second detectors differ in terms of at least one of a use of or weights applied to at least one of a first measurement associated with a first signal provided by a first sensor, a second measurement associated with a second signal provided by a second sensor, or orientation information provided by a gyroscope.

11. The device of claim 10, further comprising:
conserving power in the touch instrument by reducing or turning off power to at least one of the gyroscope or the second sensor when the orientation information or the second signal, respectively, is not utilized to determine the tilt at the second time.

12. The device of claim 10, further comprising:
correcting gyroscopic drift of the gyroscope using signals provided by the first and second sensors.

13. The method of any one of claims 9 to 12, further comprising:
determining or selecting weights applied to variables in the second tilt detector.

14. The method of any one of claims 9 to 12, further comprising:
selecting the second tilt detector from a plurality of tilt detectors.

15. A computer-readable storage medium (306, 416, 424, 1020, 1048, 1094) having program instructions recorded thereon that, when executed by a processing circuit (304, 436, 1010, 1058, 1090), perform a method according to any one of claims 9 to 14.
